# EUROPEAN PATENT APPLICATION

(11) **EP 3 418 960 A1**
(43) Date of publication of application: **26.12.2018**
(21) Application number: 18176061.2
(22) Date of filing: 05.06.2018
(51) Int. Cl.: G06Q 20/14, G06Q 20/32

(54) **MERCHANT AUTHENICATION TO VEHICLE BASED PERSONAL POINT OF SALE (PPOS) DEVICE THAT PROVIDES FOR CARD PRESENT E-COMMERCE TRANSACTION**

(30) Priority: 19.06.2017 US 201715627406
(71) Applicant: NXP B.V., 5656 AG Eindhoven (NL)
(72) Inventor: NUZUM, Todd Raymond, 5656 AG Eindhoven (NL); DOW, Michael, 5656 AG Eindhoven (NL); HILLIER, Curtis, 5656 AG Eindhoven (NL)
(74) Representative: Krott, Michel

(57) **Abstract**

Within EMV payment specification, use of an unattended terminal to accept a payment is allowed. Creating a device that has both EMV level 1 (L1) and level 2 (L2) payment components combined with a virtual merchant creates a "card present" transaction for an on-line or e-commerce merchant. This device can be called a personal Point of Sale (pPOS). This specification discloses "card present" payments from a customer's vehicle with a pPOS device in or on the vehicle. This allows for "card present" payments from a customer's vehicle for drive by or drive through payments. The specification further discloses systems and methods to authenticate the merchant or an unattended terminal of a merchant to pPOS in the customer's vehicle.

## Description

### CROSS REFERENCE TO RELATED APPLICATIONS

This application is related to U.S. Patent Application No. 15/344,508, entitled "PERSONAL POINT OF SALE (PPOS) DEVICE THAT PROVIDES FOR CARD PRESENT E-COMMERCE TRANSACTION" filed on November 4, 2016, and U.S. Patent Application No. 15/462,904, entitled "PERSONAL POINT OF SALE (PPOS) DEVICE WITH A LOCAL AND/OR REMOTE PAYMENT KERNEL THAT PROVIDES FOR CARD PRESENT E-COMMERCE TRANSACTION" filed on March 19, 2017, which are being incorporated herein by reference in their entirety.

### FIELD

The described embodiments relate generally to devices and methods that provide for e-commerce transactions and/or in vehicle merchant payments, and more particularly to vehicle based personal Point of Sale (pPOS) devices and methods that provide for card present e-commerce transactions and/or in vehicle merchant payments.

### BACKGROUND

Today, card present payments from a vehicle, car, or motorcycle are made either by handing your credit or debit card to the merchant to make a payment, or using a RF (radio frequency) transponder in your car for drive through or drive by payments. There are advantages to improving these in vehicle payments by reducing the merchant cost and fraud, as well as improving payment speed. Therefore, it is desirable to have vehicle based devices and methods that can provide for in vehicle merchant payments for card users and merchants that are more secure, faster, and cheaper.

### SUMMARY

Within the EMV payment specification, the use of an unattended terminal to accept a payment is allowed. Creating a device that has both the EMV level 1 (L1) and level 2 (L2) payment components combined with a virtual merchant creates a "card present" transaction for an on-line or e-commerce merchant. This device can be called a personal Point of Sale (pPOS). (Note: EMV stands for Europay, MasterCard, and Visa.) This specification discloses vehicle based pPOS devices and methods that can provide for card present e-commerce transactions and/or in vehicle merchant payments. In some embodiments, a vehicle based pPOS device can be standalone, connected to, or integrated into a vehicle. In some embodiments, a vehicle based pPOS device can include an external data sensor switch function, which is configured to validate, manage, and/or create transactions.

This specification discloses an invention, which uses a personal point of sale (pPOS) device in a vehicle to make payments. The pPOS device can have on device CVM (customer validation methods) for customer authentication, EMV Level 1 reader, and EMV Level 2 payment kernel. This invention can use external data elements and sources to authenticate the merchant to the pPOS device in a customer's vehicle. The external data includes the physical address of the merchant, geolocation data, cell tower phone data, local merchant Bluetooth and Wi-Fi data from beacons or hotspots. The pPOS device can also store customer transaction data including the date, time, card used and risk score of transaction. The pPOS device can also be deployed on a motorcycle or bike. These types of deployments can embed the pPOS CVM sensors into the handles or steer device of the motorcycle or bike.

Today, card present payments from a vehicle car or motorcycle are made either by handing your credit or debit card to the merchant to make a payment or a RF (radio frequency) transponder in your car for drive through or drive by payments. This invention can allow for the customer to keep the card in their vehicle to make the payment. The merchant can also ask for additional on device customer authentication methods. For drive by or through payments this invention makes these payments a "card present" payment, reducing the merchant cost and fraud. Therefore, the use of a pPOS device in a vehicle tied to external merchant data makes the payment transaction more secure, faster and cheaper for the merchant. It can also create "card present" payment for tolling and unattended drive by terminals.

This invention can use the payment history on the card and reader, external data to validate the merchant, and customer authentication on the pPOS to securely make "card present" payments without providing a customer's physical card to the merchant. This invention can also provide the merchant the ability to determine risk of the customer and transaction. Part of the authentication process of the merchant is to determine the type of merchant and payment configuration of the merchant.

In some embodiments, the merchant can be a QSR (quick service restaurant), tolling or unattended merchant terminal.

Here are some possible applications of the invention:
(1) "Card present" payment for "drive through or drive by" payments for tolling and quick service merchants,
(2) Customer authentication for automotive based payments,
(3) Merchant authentication for automotive based payments,
(4) Personal POS authentication for automotive (cars, trucks or motorcycles)..

The present invention discloses a device for providing a personal point of sale (pPOS) for card present e-commerce transactions and/or in vehicle merchant payments. The device comprises: a secure microcontroller function (MCF) and a secure element, wherein a payment kernel configured to process payment is local and/or remote to the device, wherein the device is standalone, connected to, or integrated into a vehicle. The secure element is configured to store and process payment and identification application.

In some embodiments, the device further comprises one or more of the following: a reader, a sensor switch, a user interface function, a local and/or remote payment kernel, an external data sensor switch function. The reader is configured to read a payment and/or identity instrument. The sensor switch is configured to initiate and/or terminate a transaction. The external data sensor switch function is configured to validate, manage, and/or create transactions.

In some embodiments, the external data sensor switch function is further configured to process external data for the device.

In some embodiments, a user of the device is allowed to grant access to configuration and processing of the payment kernel by a merchant, a merchant acquirer, a payment issuer, and/or an identification issuer.

In some embodiments, the device allows external data to access configuration and processing of the payment kernel by a merchant, a merchant acquirer, a payment issuer, and/or an identification issuer.

In some embodiments, the device allows external data to access configuration and processing of the payment kernel by a merchant, a merchant acquirer, a payment issuer, and/or an identification issuer, wherein the external data is processed by the external data sensor switch function.

In some embodiments, the vehicle is comprised of one or more of the following: car, bus, truck, bike, motorcycle.

In some embodiments, the device is standalone when the device has no logical or physical connection to the vehicle.

In some embodiments, the device is connected to the vehicle when the device has a logical and/or physical connection to the vehicle.

In some embodiments, the device further comprises: a second microcontroller function (MCF), wherein the device is connected to the vehicle when the device has a logical and/or physical connection to the vehicle via the second MCF.

In some embodiments, the device further comprises: a second microcontroller function (MCF), wherein the device is connected to the vehicle when the device has a logical and/or physical connection to the vehicle via the second MCF and/or a third remote MCF, wherein the third remote MCF is physically remote from the device.

In some embodiments, the device receives external sensor data via the second MCF and/or the third remote MCF.

In some embodiments, the device is integrated into the vehicle when the device has a logical and/or physical connection between one or more components and/or functions of the device to one or more components and/or functions of the vehicle.

In some embodiments, an antenna of the reader is enabled in the device, wherein the antenna is connected to, or integrated into the vehicle, wherein the interface from the antenna to the vehicle is comprised of one or more of the following: wireless charging, WiFi (wireless local area network) communication, Bluetooth or Bluetooth low energy communication, NFMI (near field magnetic induction) communication, cellular communication, V2X (vehicle-to-infrastructure and/or vehicle-to-vehicle) communication.

In some embodiments, the user interface function is enabled in the device, wherein the user interface function is connected to, or integrated into the vehicle, wherein the interface from the user interface function to the vehicle is comprised of one or more of the following: heads up interface, console interface, instrument interface, driving interface, human to machine interface, graphical user interface, gesturing interface.

In some embodiments, the sensor switch is enabled in the device, wherein the sensor switch is connected to, or integrated into the vehicle, wherein the interface from the sensor switch to the vehicle is comprised of one or more of the following: heads up interface, console interface, instrument interface, driving interface, human to machine interface, graphical user interface, gesturing interface, steering interface, navigation interface.

In some embodiments, the external data sensor switch function provides one or more of the following functions: sensor data validation and filters, data identification by type and/or sensor and/or interface and/or communication protocol, data correlation between data types and sensors, data fusion between data, communication protocol, and data types.

In some embodiments, the data types are RF (radio frequency) signals comprised of one or more of the following: WiFi (wireless local area network) signal, Bluetooth or Bluetooth low energy signal, GSM (Global System for Mobile Communications) signal, NFMI (near field magnetic induction) signal, V2X (vehicle-to-infrastructure and/or vehicle-to-vehicle) radar signal, UHF (ultra high frequency) signal, HF (high frequency) signal, LF (low frequency) signal.

In some embodiments, the data types are image data comprised of one or more of the following: images and/or videos from side, front, or rear cameras on the vehicle, images and/or videos from side, front, or rear cameras from a second vehicle.

In some embodiments, the data correlation and fusion are comprised of one or more of the following functions: sensor data collection and validation of data events, correlation of sensor data events with image processing data, and/or geolocation data, and/or transactional history, fusion of sensor data events with image processing data, and/or geolocation data, and/or transactional history.

The present invention also discloses a method for providing a personal point of sale (pPOS) for card present e-commerce transactions and/or in-vehicle payments, the method comprising: (a) initiating, by a user and/or a merchant, a request for a payment transaction; (b) presenting, by the user, an instrument to a pPOS device, wherein no instrument data is entered into a website, a web page, or a mobile application; (c) authenticating and validating, by the pPOS device, the instrument for the merchant and/or an issuer of the instrument; (d) authenticating and validating, by the merchant and/or a merchant acquirer using external sensor data, the pPOS device; (e) processing, by the pPOS device, the payment transaction.

In some embodiments, the payment transaction is an in-vehicle payment, wherein the pPOS device is configured by the merchant to process the payment transaction in a vehicle, wherein the merchant is local or remote with respect to the vehicle, wherein the user allows the merchant to configure the pPOS device for the payment transaction, wherein the instrument is provided by the user, wherein the instrument is a payment or identification instrument.

In some embodiments, the merchant initiates the payment transaction by presenting merchant identity data elements and payment requirements to the pPOS device.

In some embodiments, the merchant identity data elements are comprised of one or more of the following: merchant name, merchant type, merchant image and/or logo, merchant audio confirmation message and tone, merchant address, merchant location based on latitude and/or longitude, merchant identification, merchant's merchant acquirer, merchant payment acceptance type.

In some embodiments, the payment requirements are comprised of one or more of the following: payment amount, payment date, payment type, product and/or service description and type.

In some embodiments, a merchant uses the external sensor data to validate the user, wherein the external sensor data is comprised of one of the following: geolocation data, Bluetooth or Bluetooth low energy directional and signal power, WiFi (wireless local area network) signal, GSM (Global System for Mobile Communications) signal, NFMI (near field magnetic induction) signal, image data, radar data, V2X (vehicle-to-infrastructure and/or vehicle-to-vehicle) radar signal.

In some embodiments, a merchant acquirer uses the external sensor data to validate the merchant, wherein the external sensor data is comprised of one of the following: geolocation data, Bluetooth or Bluetooth low energy directional and signal power, WiFi (wireless local area network) signal, GSM (Global System for Mobile Communications) signal, NFMI (near field magnetic induction) signal, image data, radar data, V2X (vehicle-to-infrastructure and/or vehicle-to-vehicle) radar signal.

In some embodiments, the user uses the external sensor data to validate the merchant initiating the payment request, wherein the external sensor data is comprised of one of the following: geolocation data, Bluetooth or Bluetooth low energy directional and signal power, WiFi (wireless local area network) signal, GSM (Global System for Mobile Communications) signal, NFMI (near field magnetic induction) signal, image data, radar data, V2X (vehicle-to-infrastructure and/or vehicle-to-vehicle) radar signal.

The present invention further discloses a device for providing a personal point of sale (pPOS) for card present e-commerce transactions and/or in vehicle merchant payments. The device comprises: a secure microcontroller function (MCF), a secure element, and an external data sensor switch function, wherein a payment kernel configured to process payment is local and/or remote to the device, wherein the device is standalone, connected to, or integrated into a vehicle. The secure element is configured to store and process payment and identification application. The external data sensor switch function is configured to validate, manage, and/or create transactions.

The above summary is not intended to represent every example embodiment within the scope of the current or future Claim sets. Additional example embodiments are discussed within the Figures and Detailed Description below.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the spirit and scope of the described embodiments.
FIG. 1A shows a first vehicle based personal Point of Sale (pPOS) device that is configured to provide for card present e-commerce transactions and/or in vehicle merchant payments, wherein a payment kernel configured to process payment is local and/or remote to the device, wherein the device is standalone, connected to, or integrated into a vehicle, in accordance with some example embodiments.
FIG. 1B shows a second vehicle based personal Point of Sale (pPOS) device that is configured to provide for card present e-commerce transactions and/or in vehicle merchant payments, further comprising an external data sensor switch function, in accordance with some example embodiments.
FIG. 1C shows a third vehicle based personal Point of Sale (pPOS) device that is configured to provide for card present e-commerce transactions and/or in vehicle merchant payments, further comprising a reader, a sensor switch, a user interface function, an external data sensor switch function, in accordance with some example embodiments.
FIG. 2 shows a fourth vehicle based personal Point of Sale (pPOS) device that is configured to provide for card present e-commerce transactions and/or in vehicle merchant payments, wherein the device is standalone, in accordance with some example embodiments.
FIG. 3A shows a fifth vehicle based personal Point of Sale (pPOS) device that is configured to provide for card present e-commerce transactions and/or in vehicle merchant payments, wherein the device is integrated into a vehicle, in accordance with some example embodiments.
FIG. 3B shows a sixth vehicle based personal Point of Sale (pPOS) device that is configured to provide for card present e-commerce transactions and/or in vehicle merchant payments, wherein the device is integrated into a vehicle, in accordance with some example embodiments.
FIG. 3C shows a seventh vehicle based personal Point of Sale (pPOS) device that is configured to provide for card present e-commerce transactions and/or in vehicle merchant payments, wherein the device is integrated into a vehicle, in accordance with some example embodiments.
FIG. 4 shows an eighth vehicle based personal Point of Sale (pPOS) device that is configured to provide for card present e-commerce transactions and/or in vehicle merchant payments, wherein the device is connected to a vehicle, in accordance with some example embodiments.
FIG. 5 shows a ninth vehicle based personal Point of Sale (pPOS) device that is configured to provide for card present e-commerce transactions and/or in vehicle merchant payments, wherein the device is connected to a vehicle, in accordance with some example embodiments.
FIG. 6 shows a tenth vehicle based personal Point of Sale (pPOS) device that is configured to provide for card present e-commerce transactions and/or in vehicle merchant payments, wherein the device is connected to and integrated into a vehicle, in accordance with some example embodiments.
FIG. 7 shows an eleventh vehicle based personal Point of Sale (pPOS) device that is configured to provide for card present e-commerce transactions and/or in vehicle merchant payments, wherein the device is connected to and integrated into a vehicle, in accordance with some example embodiments.
FIG. 8A shows a twelfth vehicle based personal Point of Sale (pPOS) device that is configured to provide for card present e-commerce transactions and/or in vehicle merchant payments, wherein the device is connected to and integrated into a vehicle, in accordance with some example embodiments.
FIG. 8B shows a twelfth vehicle based personal Point of Sale (pPOS) device that is configured to provide for card present e-commerce transactions and/or in vehicle merchant payments, wherein the device is connected to and integrated into a vehicle (in a different configuration from FIG. 8A), in accordance with some example embodiments.
FIG. 9A shows a first QSR (quick service restaurant) configuration that can use a vehicle based personal Point of Sale (pPOS) device for providing card present e-commerce transactions, in accordance with some example embodiments.
FIG. 9B shows a second QSR (quick service restaurant) configuration that can use a vehicle based personal Point of Sale (pPOS) device for providing card present e-commerce transactions, together with multiple vehicles and V2X communication, in accordance with some example embodiments.
FIG. 10 shows a third QSR (quick service restaurant) configuration that can use a vehicle based personal Point of Sale (pPOS) device for providing card present e-commerce transactions, together with local merchant interface, in accordance with some example embodiments.
FIG. 11 shows a fourth QSR (quick service restaurant) configuration that can use a vehicle based personal Point of Sale (pPOS) device for providing card present e-commerce transactions, together with remote payment kernel, in accordance with some example embodiments.
FIG. 12A shows a first tolling booth configuration that can use a vehicle based personal Point of Sale (pPOS) device for providing card present e-commerce transactions, in accordance with some example embodiments.
FIG. 12B shows a second tolling booth configuration that can use a vehicle based personal Point of Sale (pPOS) device for providing card present e-commerce transactions, together with multiple vehicles and V2X communication, in accordance with some example embodiments.
FIG. 13 shows a flow chart of method steps for providing a personal Point of Sale (pPOS) for card present e-commerce transactions and/or in-vehicle payments, in accordance with some example embodiments.

### DETAILED DESCRIPTION

Representative devices and methods according to the present application are described in this section. These examples are being provided solely to add context and aid in the understanding of the described embodiments. It will thus be apparent to one skilled in the art that the described embodiments may be practiced without some or all of these specific details. In other instances, well known process steps or device details have not been described in detail in order to avoid unnecessarily obscuring the described embodiments. Other embodiments are possible, such that the following examples should not be taken as limiting.

In the following detailed description, references are made to the accompanying drawings, which form a part of the description and in which are shown, by way of illustration, specific embodiments in accordance with the described embodiments. Although these embodiments are described in sufficient detail to enable one skilled in the art to practice the described embodiments, it is understood that these examples are not limiting; such that other embodiments may be used, and changes may be made without departing from the spirit and scope of the described embodiments.

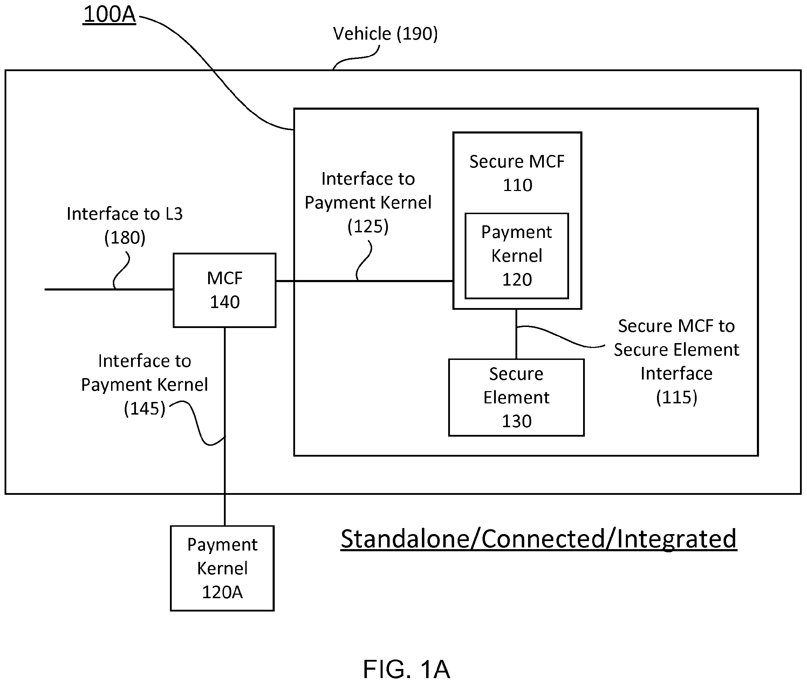

FIG. 1A shows a first vehicle based personal Point of Sale (pPOS) device 100A that is configured to provide for card present e-commerce transactions and/or in vehicle merchant payments, wherein a payment kernel configured to process payment is local and/or remote to the device, wherein the device is standalone, connected to, or integrated into a vehicle, in accordance with some example embodiments. FIG. 1A shows that pPOS device 100A is based in a vehicle 190. FIG. 1A further shows that the pPOS device 100A includes a secure microcontroller function (MCF) 110, a secure element 130, a secure MCF to secure element interface (115), and an interface to payment kernel (125). FIG. 1A also shows that a local payment kernel 120 and a remote payment kernel 120A can be used for payment processing. It is not shown in FIG. 1A, but in some embodiments, a local payment kernel 120 or a remote payment kernel 120A can be used for payment processing (i.e., only use a local payment kernel 120, or only use a remote payment kernel 120A). FIG. 1A shows that an external MCF 140 can be used for interfacing the pPOS device 100A to the remote payment kernel 120A and a certified EMV (EMV stands for Europay, MasterCard, and Visa) level 3 (L3) payment application, via an interface to payment kernel (145) and an interface to L3 (180) respectively. But, in some other embodiments (not shown in FIG. 1A), the interfacing can occur without the MCF 140, so that the interfacing is direct from the pPOS device 100A to the payment kernel 120 and EMV level 3 (L3) payment application. The external MCF 140 is interfaced to the secure MCF 110 via an interface to payment kernel 125. The pPOS device 100A can also include other components and interfaces, but these are not shown in detail in order to avoid unnecessarily obscuring the described embodiments.

In FIG. 1A, the secure MCF 110 can be configured to provide application and data level encryption and hardware/software tamper detection. The local payment kernel 120 is internal to the pPOS device 100A, while the remote payment kernel 120A is external to the pPOS device 100A. The local payment kernel 120 and/or the remote payment kernel 120A can be configured to process payment. In some embodiments, a user can allow the payment kernel 120 to be configured by a merchant and/or merchant acquirer for a merchant payment or a user authentication transaction. In some embodiments, the payment kernel 120 can be EMV level 2 certified for contact and/or contact less transaction, where EMV stands for Europay, MasterCard, and Visa. In FIG. 1A, remote payment kernel 120A is shown to be external to vehicle 190. But, in some embodiments (not shown in FIG. 1A), remote payment kernel 120A can be external to pPOS device 100A, but internal to vehicle 190.

In FIG. 1A, the secure element 130 can be configured to store and process payment and identification application. In some embodiments, the secure element 130 can be configured to execute a secure element application that is used for payment and authentication. In some embodiments, the secure element application can perform authentication using a multi-factor authentication method. In some embodiments, the secure element application can perform authentication using a multi-factor authentication method via PKI (public key infrastructure) and FIDO (Fast IDentity Online). In some embodiments, the secure element 130 can be further configured to execute a second secure element application that is used for customer biometric storage and validation.

In FIG. 1A, the pPOS device 100A only includes a secure MCF 110. In some embodiments, the secure MCF 110 can be configured to perform I/O (input/output) functions. In some embodiments, the secure MCF 100 can be configured to perform I/O (input/output) functions with a certified EMV level 3 (L3) payment application, where EMV stands for Europay, MasterCard, and Visa. In FIG. 1A, these I/O functions with the EMV level 3 payment application can be performed via the interface 180 (and interface to payment kernel 125). In some embodiments, the secure MCF 110 can be configured to perform I/O (input/output) functions with the certified EMV level 3 payment application using one or more of the following: USB (Universal Serial Bus), audio jack, Bluetooth, WiFi (wireless local area network), NFC (near field communication), near field magnetic induction (NFMI) communication, a remote MCF, and any computer network. Therefore, for example, the pPOS device 100A can perform I/O functions with the EMV level 3 payment application directly using any computer network (such as PAN (personal area network), LAN (local area network), WAN (wide area network), MAN (metropolitan area network), etc.) in a peer to peer configuration. Or, in another example, the pPOS device 100A can perform I/O functions with the EMV level 3 payment application indirectly using a remote MCF (in a peer to peer configuration or a tethering configuration). In such a case, the remote MCF can be a laptop computer, a desktop computer, a tablet computer, a smart phone, or any device that can access the internet. Further, the pPOS device 100A can be configured to interface with the remote MCF in a tethering configuration using the audio jack or one of these interface protocols: USB, Bluetooth, WiFi, NFC, NFMI.

In some embodiments (not shown in FIG. 1A), the secure MCF 110 can directly interface with the L3 payment application and the remote payment kernel 120A, so that no MCF 140 is used. In some embodiments (not shown in FIG. 1A), the secure MCF 110 can still interface with the L3 payment application and the remote payment kernel 120A via MCF 140, but MCF 140 is internal to pPOS device 100A. In FIG. 1A, MCF 140 is shown to be external to pPOS device 100A.

The pPOS device 100A can be standalone, connected to, or integrated into a vehicle. If pPOS device 100A can directly interface with the L3 payment application and the remote payment kernel 120A (i.e., there is no MCF 140 external to pPOS device 100A, or MCF 140 is internal to pPOS device 100A - not shown in FIG. 1A), then pPOS device 100A is standalone. If pPOS device 100A interfaces with the L3 payment application and the remote payment kernel 120A via an external MCF 140 (as shown in FIG. 1A), then pPOS device 100A is connected to a vehicle. If pPOS device 100A has a logical and/or physical connection between one or more components and/or functions of the device to one or more components and/or functions of the vehicle, then pPOS device 100A is integrated into a vehicle. The "integrated into a vehicle" embodiment is not explicitly shown in FIG. 1A, since there are no other components and/or functions of pPOS device 100A shown in FIG. 1A.

If there is no MCF 140 external to pPOS device 100A, or MCF 140 is internal to pPOS device 100A (not shown in FIG. 1A), then pPOS device 100A can directly interface with the L3 payment application and the remote payment kernel 120A. In that embodiment, pPOS device 100A can operate without having any logical or physical connection to the vehicle, so pPOS device 100A is standalone. Of course, pPOS device 100A can still be physically situated within the vehicle, but as a standalone device pPOS device 100A is directly accessing the L3 payment application and the remote payment kernel 120A, without connecting to any component and/or function of the vehicle.

On the other hand, if pPOS device 100A interfaces with the L3 payment application and the remote payment kernel 120A via an external MCF 140 that is a component and/or function of the vehicle (as shown in FIG. 1A), then pPOS device 100A is connected to a vehicle. In this embodiment, pPOS device 100A has a logical and/or physical connection to the vehicle via MCF 140. For example, pPOS device 100A can be using the vehicle to connect to the local WiFi (wireless local area network) or to cellular communications. In some embodiments, pPOS device 100A can be connected to a vehicle bus, where a vehicle bus is a specialized internal communications network that interconnects components inside a vehicle (e.g. automobile, bus, train, industrial or agricultural vehicle, ship, or aircraft).

The "integrated into a vehicle" embodiment is not explicitly shown in FIG. 1A, since there are no other components and/or functions of pPOS device 100A shown in FIG. 1A. But If pPOS device 100A has one or more components and/or functions, which has a logical and/or physical connection with one or more components and/or functions of the vehicle, then pPOS device 100A is integrated into (or embedded into) a vehicle.

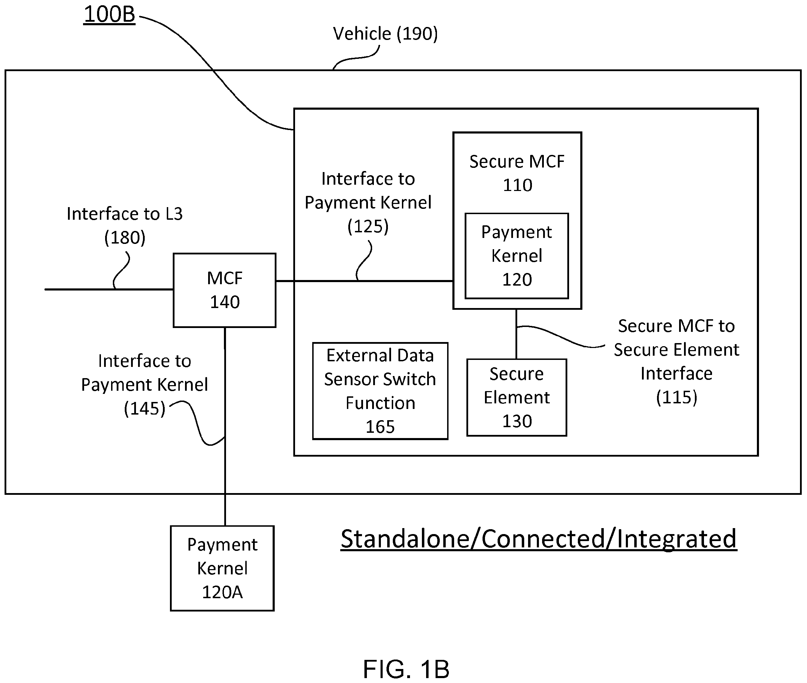

FIG. 1B shows a second vehicle based personal Point of Sale (pPOS) device 100B that is configured to provide for card present e-commerce transactions and/or in vehicle merchant payments, further comprising an external data sensor switch function, in accordance with some example embodiments. The pPOS device 100B is very similar to the pPOS device 100A shown in FIG. 1A, except that the pPOS device 100B further includes an external data sensor switch function. In some embodiments, the external data sensor switch function is configured to process external data for the device. In some embodiments, the external data sensor switch function is configured to validate, manage, and/or create transactions. In some embodiments, the external data sensor switch function allows external data to access configuration and processing of the payment kernel by a merchant, a merchant acquirer, a payment issuer, and/or an identification issuer. In some embodiments, the external data sensor switch function allows external data to access configuration and processing of the payment kernel by a merchant, a merchant acquirer, a payment issuer, and/or an identification issuer, wherein the external data is processed by the external data sensor switch function. In some embodiments, the external data sensor switch function provides one or more of the following functions: (1) sensor data validation and filters, (2) data identification by type and/or sensor and/or interface and/or communication protocol, (3) data correlation between data types and sensors, (4) data fusion between data, communication protocol, and data types.

In some embodiments, the pPOS device 100B can use external data elements and sources to authenticate the merchant to the pPOS device 100B in a customer's vehicle. The external data includes the physical address of the merchant, geolocation data, cell tower phone data, local merchant Bluetooth and Wi-Fi data from beacons or hotspots.

In some embodiments, the external data can include sensor data, such as cellular signal, WiFi (wireless local area network) signal, UHF (ultra high frequency) signal, beacon signal, V2X (vehicle-to-infrastructure and/or vehicle-to-vehicle) radar signal, image data. In some embodiments, the external data can include sensor data which is comprised of one of the following: geolocation data, Bluetooth or Bluetooth low energy directional and signal power, WiFi (wireless local area network) signal, GSM (Global System for Mobile Communications) signal, NFMI (near field magnetic induction) signal, image data, radar data, V2X (vehicle-to-infrastructure and/or vehicle-to-vehicle) radar signal.

In some embodiments, the external data types are RF (radio frequency) signals comprised of one or more of the following: WiFi (wireless local area network) signal, Bluetooth or Bluetooth low energy signal, GSM (Global System for Mobile Communications) signal, NFMI (near field magnetic induction) signal, V2X (vehicle-to-infrastructure and/or vehicle-to-vehicle) radar signal, UHF (ultra high frequency) signal, HF (high frequency) signal, LF (low frequency) signal. In some embodiments, the external data types are image data comprised of one or more of the following: images and/or videos from side, front, or rear cameras on the vehicle, images and/or videos from side, front, or rear cameras from a second vehicle.

With regards to sensor data validation and filters, in some embodiments, sensor data filter is the process or ability of removing data errors like measurement errors, inconsistent data, and/or duplicate data form a sensor. An example would be getting WiFi data from a merchant and some of data is missing data elements. Filter would remove/delete that data.

With regards to data correlation between data types and sensors, in some embodiments, sensor data correlation is the ability to understand the data gathered as it applies to other data in the appropriate context. Data correlation is the ability to pull data from various sources and derive benefit from the understanding of the relationship between them to determine a more informed way forward. An example would be combining WiFi merchant data with geolocation user cell data as a way to determine that a user is at the merchant location.

With regards to data fusion between data, communication protocol, and data types, in some embodiments, sensor data fusion is the process of integrating multiple data sources to produce more consistent, accurate, and useful information than that provided by any individual data source. An example for this would be creating a new event/transaction from WiFi merchant data with geolocation user cell data and a pPOS device for a user to make a payment.

In some embodiments, the data correlation and fusion are comprised of one or more of the following functions: sensor data collection and validation of data events, correlation of sensor data events with image processing data, and/or geolocation data, and/or transactional history, fusion of sensor data events with image processing data, and/or geolocation data, and/or transactional history.

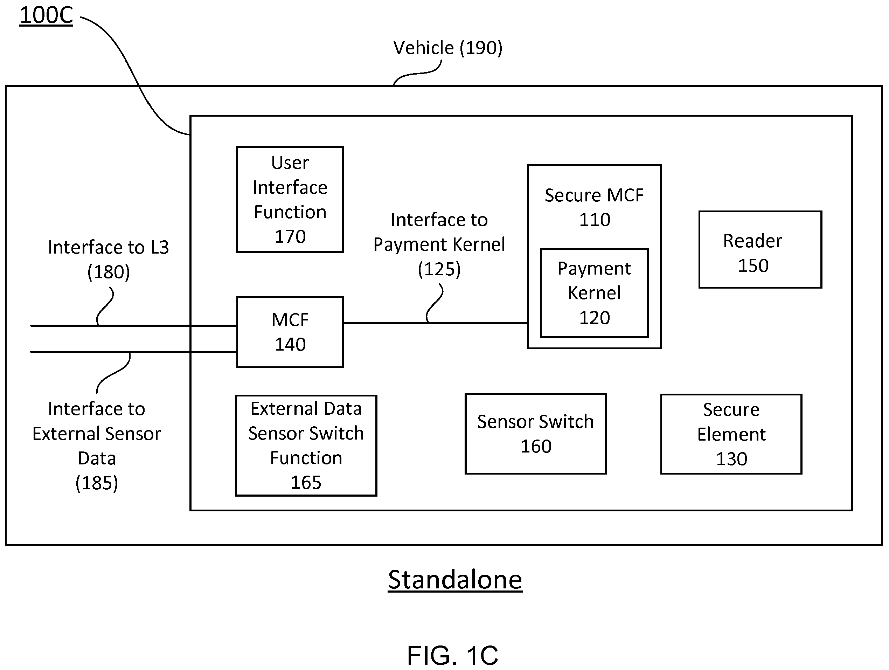

FIG. 1C shows a third vehicle based personal Point of Sale (pPOS) device 100C that is configured to provide for card present e-commerce transactions and/or in vehicle merchant payments, further comprising a reader, a sensor switch, a user interface function, an external data sensor switch function, in accordance with some example embodiments. FIG. 1C shows that pPOS device 100C is based in a vehicle 190. FIG. 1C further shows that the pPOS device 100C includes a secure microcontroller function (MCF) 110, a secure element 130, a second MCF 140, a reader 150, a sensor switch 160, a user interface function 170, and an external data sensor switch function 165. FIG. 1C also shows that a local payment kernel 120 (which is contained in the secure MCF 110) can be used for payment processing. It is not shown in FIG. 1C, but in some embodiments, a local payment kernel 120 and/or a remote payment kernel can be used for payment processing. FIG. 1C shows that an internal MCF 140 can be used for interfacing the pPOS device 100C to external sensor data and a certified EMV (EMV stands for Europay, MasterCard, and Visa) level 3 (L3) payment application, via an interface to external sensor data (185) and an interface to L3 (180) respectively. But, in some other embodiments (not shown in FIG. 1C), the interfacing can occur without the MCF 140, so that the interfacing is direct from the secure MCF 110 to external sensor data and EMV level 3 (L3) payment application. Alternatively, in some other embodiments (not shown in FIG. 1C), the secure MCF 110 can also interface to external sensor data and EMV level 3 (L3) payment application via an MCF that is external to pPOS device 100C. The pPOS device 100C can also include other interfaces, but these are not shown in detail in order to avoid unnecessarily obscuring the described embodiments.

In FIG. 1C, the secure MCF 110 can be configured to provide application and data level encryption and hardware/software tamper detection. The payment kernel 120 is contained in the secure MCF 110, and can be configured to process payment. In some embodiments, a user can allow the payment kernel 120 to be configured by a merchant and/or merchant acquirer for a merchant payment or a user authentication transaction. In some embodiments, the payment kernel 120 can be EMV level 2 certified for contact and/or contact less transaction, where EMV stands for Europay, MasterCard, and Visa.

In FIG. 1C, the secure element 130 can be configured to store and process payment and identification application. In some embodiments, the secure element 130 can be configured to execute a secure element application that is used for payment and authentication. In some embodiments, the secure element application can perform authentication using a multi-factor authentication method. In some embodiments, the secure element application can perform authentication using a multi-factor authentication method via PKI (public key infrastructure) and FIDO (Fast IDentity Online). In some embodiments, the secure element 130 can be further configured to execute a second secure element application that is used for customer biometric storage and validation.

In FIG. 1C, the pPOS device 100C also includes a second MCF 140. In some embodiments, the secure MCF 110 and/or a second MCF 140 can be configured to perform I/O (input/output) functions. In some embodiments, the secure MCF 110 and/or the second MCF 140 can be configured to perform I/O (input/output) functions with a certified EMV level 3 (L3) payment application, where EMV stands for Europay, MasterCard, and Visa. In FIG. 1C, these I/O functions with the EMV level 3 payment application can be performed via the interface 180. In some embodiments, the secure MCF 110 and/or the second MCF 140 can be configured to perform I/O (input/output) functions with the certified EMV level 3 payment application using one or more of the following: USB (Universal Serial Bus), audio jack, Bluetooth, WiFi (wireless local area network), NFC (near field communication), near field magnetic induction (NFMI) communication, a remote MCF, and any computer network. Therefore, for example, the pPOS device 100C can perform I/O functions with the EMV level 3 payment application directly using any computer network (such as PAN (personal area network), LAN (local area network), WAN (wide area network), MAN (metropolitan area network), etc.) in a peer to peer configuration. Or, in another example, the pPOS device 100C can perform I/O functions with the EMV level 3 payment application indirectly using a remote MCF (in a peer to peer configuration or a tethering configuration). In such a case, the remote MCF can be a laptop computer, a desktop computer, a tablet computer, a smart phone, or any device that can access the internet. Further, the pPOS device 100C can be configured to interface with the remote MCF in a tethering configuration using the audio jack or one of these interface protocols: USB, Bluetooth, WiFi, NFC, NFMI.

FIG. 1C shows that pPOS device 100C has several components and/or functions, but these components and/or functions are not shown to have a logical and/or physical connection with one or more components and/or functions of the vehicle 190. Therefore, pPOS device 100C is not integrated into a vehicle. Because pPOS device 100C does not interface with the L3 payment application and the external sensor data via an external MCF (as shown in FIG. 1C), pPOS device 100A is not connected to a vehicle. On the other hand, FIG. 1C shows that pPOS device 100C can directly interface with the L3 payment application and external sensor data (without needing an MCF external to pPOS device 100C to manage the interfacing to the L3 payment application and external sensor data). Therefore, pPOS device 100A is standalone, because pPOS device 100A can operate without having any logical or physical connection to the vehicle.

In FIG. 1C, the reader 150 can be configured to read a payment and/or identity instrument. In some embodiments, the reader 150 can be a certified EMV level 1 contact and/or contact less reader, where EMV stands for Europay, MasterCard, and Visa. In some embodiments, an antenna of the reader 150 can be enabled in a pPOS device enclosure or integrated into an external device. In some embodiments, the external device can be one of the following: wireless charging, WiFi (wireless local area network) communication, Bluetooth or Bluetooth low energy communication, near field magnetic induction (NFMI) communication, and cellular communication.

In FIG. 1C, the sensor switch 160 can be configured to initiate and/or terminate a transaction. In some embodiments, the sensor switch 160 can be further configured to collect user authentication data. In some embodiments, the sensor switch 160 can be further configured to collect user authentication data and notify a user of a device status.

In some embodiments, the sensor switch 160 includes a biometric sensor. In some embodiments, the biometric sensor is used to collect user biometric data for enrollment and authentication of the user of the device, and/or the transaction from the device to a merchant and/or a merchant acquirer. In some embodiments, the biometric data is managed by the user of the device. In some embodiments, the biometric data can be one or more of the following: a face of the user, a finger of the user, a fingerprint of the user, an iris of the user, a voice of the user, a heart rhythm of the user, a physical attribute of the user.

In some embodiments, the sensor switch 160 includes a touch sensor. In some embodiments, the touch sensor is used to collect user created data for enrollment and authentication of the user of the device, and/or the transaction from the device to a merchant and/or a merchant acquirer. In some embodiments, a touch pattern and a sequence data can be managed by the user of the device using the touch sensor.

In FIG. 1C, the user interface function 170 can provide a status of the device and a state of the transaction. In some embodiments, the user interface function 170 can use one or more of the following interfaces: a visual display, a light, a series of lights, an audio interface, a haptics interface. In some embodiments, the user interface function 170 can also use other interfaces to provide a status of the device and a state of the transaction.

In some embodiments, a pPOS device can provide the following services or functions:
a. Enablement of Point to Point encryption (P2PE) or End to End (E2EE) encryption security
b. Reader to card CVM (customer validation methods) validation of issuer provided CVM data elements
c. Merchant selectable CVM and data elements based on transaction elements and rules
d. Merchant web site integration

In some embodiments, a pPOS device can provide for device or transaction activation. For example, this can include tap and/or slide switches for customer creation and validate activation sequences.

In some embodiments, a pPOS device can provide the following features:
a. Storage of customer's CVMs in a secure element
b. CVM validation of customer CVM
c. Biometric sensors to collect customer biometric
d. Activation switches
e. Display of device status, merchant messages, issuer messages, and on card applet messages

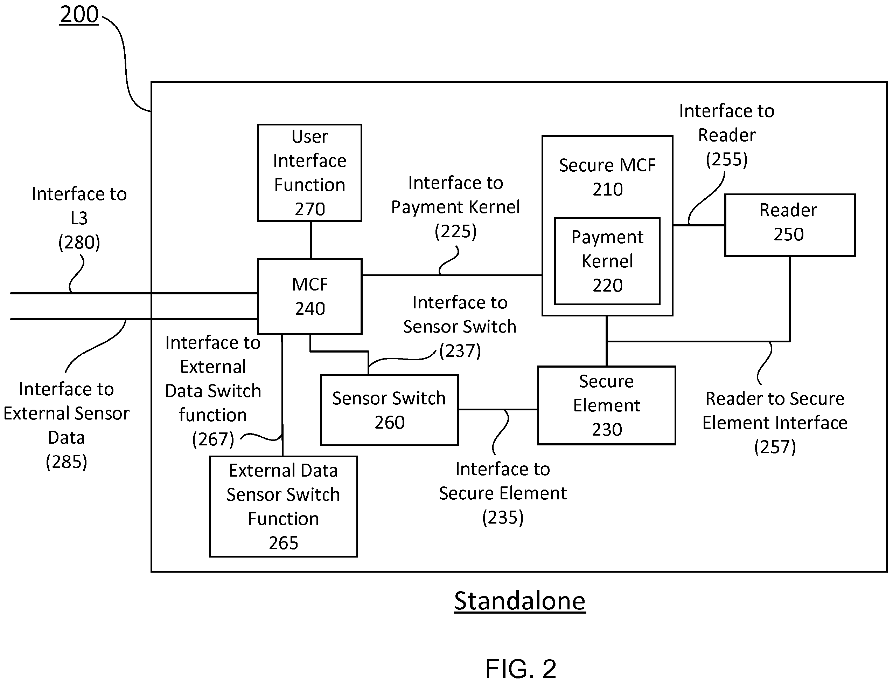

FIG. 2 shows a fourth vehicle based personal Point of Sale (pPOS) device that is configured to provide for card present e-commerce transactions and/or in vehicle merchant payments, wherein the device is standalone, in accordance with some example embodiments. The FIG. 2 pPOS device 200 is similar to the FIG. 1C pPOS device 100C, but the FIG. 2 pPOS 200 provides more details regarding the interfaces that can be used between the various elements of a pPOS device. In particular, FIG. 2 shows that the pPOS device 200 includes most elements that are similar to those elements shown in FIG. 1C. For example, FIG. 2 shows that pPOS device 200 includes a secure microcontroller function (MCF) 210, a payment kernel 220 (which is contained in the secure MCF 210), a secure element 230, a second MCF 240, a reader 250, a sensor switch 260, a user interface function 270, and an external data sensor switch function 265. FIG. 2 also shows that the pPOS device 200 includes an interface 280 to a certified EMV level 3 (L3) payment application (where EMV stands for Europay, MasterCard, and Visa), an interface 225 between the secure MCF 210 and the second MCF 240, and an interface 285 between the second MCF 240 and the external sensor data. All of these elements shown in FIG. 2 can be matched with a corresponding element shown in FIG. 1C (for example: secure MCF 210 can be matched with secure MCF 110; payment kernel 220 can be matched with payment kernel 120; etc.). Furthermore, the functions and properties of the matching elements from the two FIGS. can be very similar or nearly identical (for example: secure MCF 210, like the matching secure MCF 110 from FIG. 1C, can also be configured to provide application and data level encryption and hardware/software tamper detection).

Additionally, FIG. 2 also shows that the pPOS device 200 can include an interface 255 between the secure MCF 210 and the reader 250, an interface 235 between the secure element 230 and the sensor switch 260, an interface 257 between the reader 250 and the secure element 230, an interface 237 between the sensor switch 260 and the second MCF 240, and an interface 267 between the external data sensor switch 265 and the second MCF 240. As an example, interface 235 between the secure element 230 and the sensor switch 260 can be used to help collect user biometric data, since the sensor switch 260 can include a biometric sensor, which is used to collect user biometric data for enrollment and authentication of the user of the device. As another example, interface 257 between the reader 250 and the secure element 230 can be used to help process payment and authentication of a card being read by reader 250, since the secure element 230 can be configured to execute a secure element application that is used for payment and authentication.

FIG. 2 shows that pPOS device 200 can directly interface with the L3 payment application and external sensor data (without needing an MCF external to pPOS device 200 to manage the interfacing to the L3 payment application and external sensor data). Therefore, pPOS device 200 can operate without having any logical or physical connection to the vehicle. pPOS device 200 is a standalone.

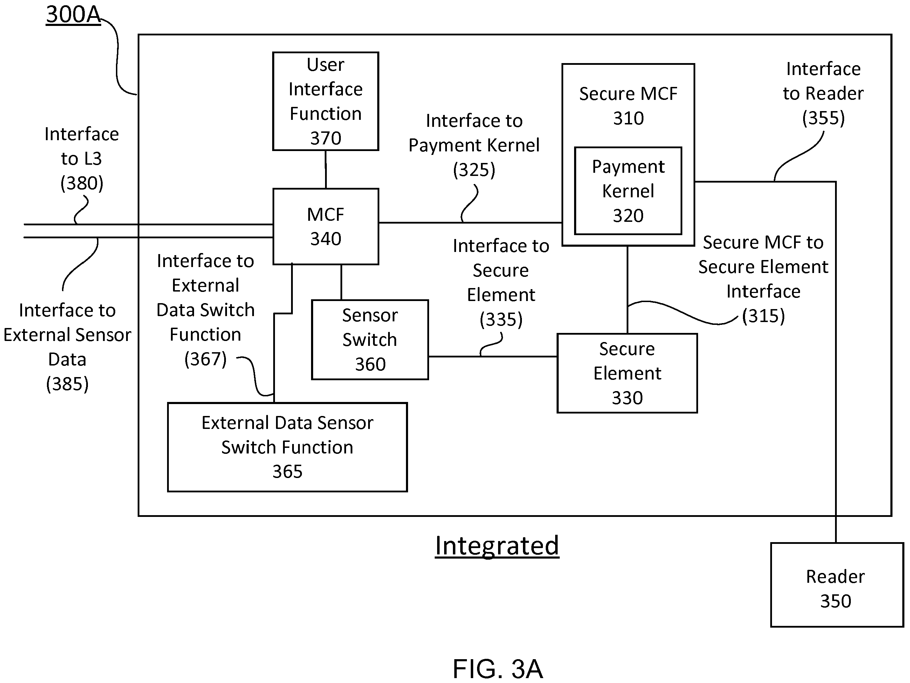

FIG. 3A shows a fifth vehicle based personal Point of Sale (pPOS) device 300A that is configured to provide for card present e-commerce transactions and/or in vehicle merchant payments, wherein the device is integrated into a vehicle, in accordance with some example embodiments. The FIG. 3A pPOS device 300A is similar to the FIG. 2 pPOS device 200, except the reader 350 is now external to pPOS 300A. In particular, FIG. 3A shows that the pPOS device 300A includes most elements that are similar to those elements shown in FIG. 2. For example, FIG. 3A shows that pPOS device 300A includes a secure microcontroller function (MCF) 310, a payment kernel 320 (which is contained in the secure MCF 310), a secure element 330, a second MCF 340, a sensor switch 360, a user interface function 370, and an external data sensor switch function 365. FIG. 3A also shows that the pPOS device 300A includes the following interfaces: an interface 325 between secure MCF 310 and the second MCF 340, an interface 355 between secure MCF 310 and the reader 350, an interface 315 between the secure MCF 310 and the secure element 330, an interface 335 between the secure element 330 and the sensor switch 360, an interface 367 between the external data sensor switch 365 and the second MCF 340, an interface 380 between the second MCF 340 and the L3 payment application, an interface 385 between the second MCF 340 and the external sensor data, and other unlabeled interfaces.

FIG. 3A shows that pPOS device 300A has several components and/or functions (e.g., sensor switch, external data sensor switch function, etc.), and one of these components and/or functions (i.e., reader 350) is shown to be external to pPOS device 300A. Reader 350 is external to to pPOS device 300A, so it can have a logical and/or physical connection with one or more components and/or functions of the vehicle. As an example, reader 350 can be a reader that is built into the vehicle that can be configured to read a payment and/or identity instrument. Therefore, pPOS device 300A is integrated into a vehicle.

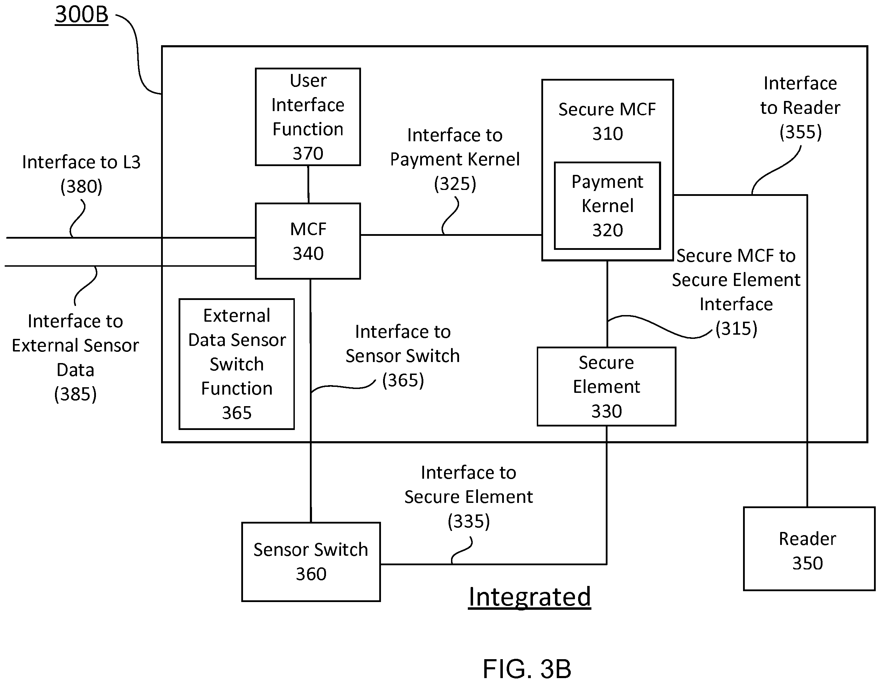

FIG. 3B shows a sixth vehicle based personal Point of Sale (pPOS) device 300B that is configured to provide for card present e-commerce transactions and/or in vehicle merchant payments, wherein the device is integrated into a vehicle, in accordance with some example embodiments. The FIG. 3B pPOS device 300B is similar to the FIG. 2 pPOS device 200, except both the reader 350 and sensor switch 360 are now external to pPOS 300B. In particular, FIG. 3B shows that the pPOS device 300B includes most elements that are similar to those elements shown in FIGS. 2 and 3A. For example, FIG. 3B shows that pPOS device 300B includes a secure microcontroller function (MCF) 310, a payment kernel 320 (which is contained in the secure MCF 310), a secure element 330, a second MCF 340, a user interface function 370, and an external data sensor switch function 365. FIG. 3B also shows that the pPOS device 300B includes the following interfaces: an interface 325 between secure MCF 310 and the second MCF 340, an interface 355 between secure MCF 310 and the reader 350, an interface 315 between the secure MCF 310 and the secure element 330, an interface 335 between the secure element 330 and the sensor switch 360, an interface 365 between the sensor switch 360 and the second MCF 340, an interface 380 between the second MCF 340 and the L3 payment application, an interface 385 between the second MCF 340 and the external sensor data, and other unlabeled interfaces.

FIG. 3B shows that pPOS device 300B has several components and/or functions (e.g., external data sensor switch function, etc.), and two of these components and/or functions (i.e., reader 350 and sensor switch 360) are shown to be external to pPOS device 300B. Reader 350 and sensor switch 360 are external to to pPOS device 300B, so they can have a logical and/or physical connection with one or more components and/or functions of the vehicle. As an example, reader 350 can be a reader that is built into the vehicle that can be configured to read a payment and/or identity instrument, and sensor switch 360 can be a sensor switch that is built into the vehicle that can be configured to initiate and/or terminate a transaction. Therefore, pPOS device 300B is integrated into a vehicle.

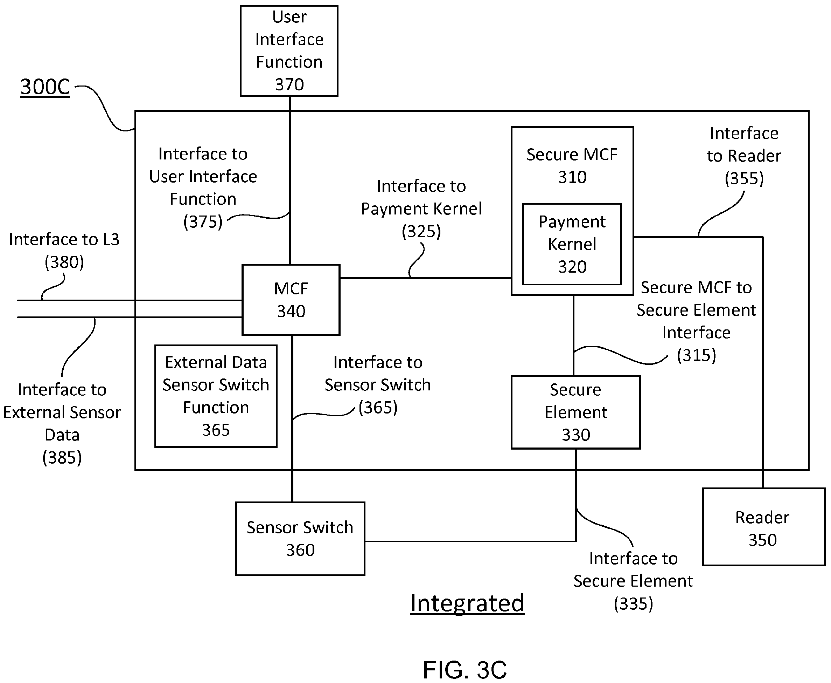

FIG. 3C shows a seventh vehicle based personal Point of Sale (pPOS) device 300C that is configured to provide for card present e-commerce transactions and/or in vehicle merchant payments, wherein the device is integrated into a vehicle, in accordance with some example embodiments. The FIG. 3C pPOS device 300C is similar to the FIG. 2 pPOS device 200, except the reader 350, sensor switch 360, and the user interface function 370 are all now external to pPOS 300C. In particular, FIG. 3C shows that the pPOS device 300C includes most elements that are similar to those elements shown in FIGS. 2, 3A, and 3B. For example, FIG. 3C shows that pPOS device 300C includes a secure microcontroller function (MCF) 310, a payment kernel 320 (which is contained in the secure MCF 310), a secure element 330, a second MCF 340, and an external data sensor switch function 365. FIG. 3C also shows that the pPOS device 300C includes the following interfaces: an interface 325 between secure MCF 310 and the second MCF 340, an interface 355 between secure MCF 310 and the reader 350, an interface 315 between the secure MCF 310 and the secure element 330, an interface 335 between the secure element 330 and the sensor switch 360, an interface 365 between the sensor switch 360 and the second MCF 340, an interface 375 between the user interface function 370 and the second MCF 340, an interface 380 between the second MCF 340 and the L3 payment application, an interface 385 between the second MCF 340 and the external sensor data, and other unlabeled interfaces.

FIG. 3C shows that pPOS device 300C has several components and/or functions (e.g., external data sensor switch function, etc.), and two of these components and/or functions (i.e., reader 350, sensor switch 360, and user interface function 370) are shown to be external to pPOS device 300C. Reader 350, sensor switch 360, and user interface function 370 are external to pPOS device 300C, so they can have a logical and/or physical connection with one or more components and/or functions of the vehicle. As an example, reader 350 can be a reader that is built into the vehicle that can be configured to read a payment and/or identity instrument, sensor switch 360 can be a sensor switch that is built into the vehicle that can be configured to initiate and/or terminate a transaction, and user interface function 370 can be a user interface switch that is built into the vehicle that can be configured to provide a status of the device and a state of the transaction. Therefore, pPOS device 300C is integrated into a vehicle.

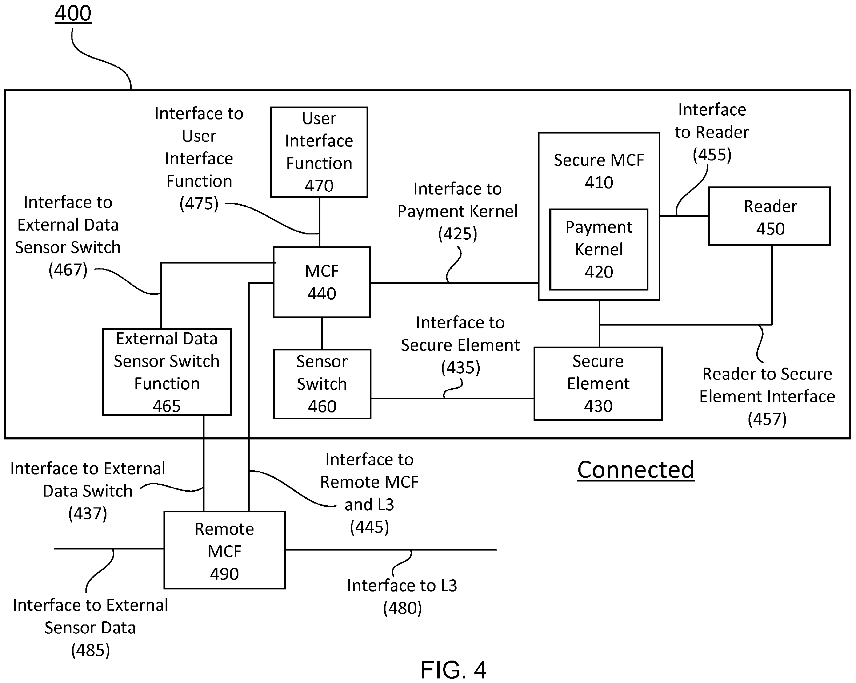

FIG. 4 shows an eighth vehicle based personal Point of Sale (pPOS) device 400 that is configured to provide for card present e-commerce transactions and/or in vehicle merchant payments, wherein the device is connected to a vehicle, in accordance with some example embodiments. The FIG. 4 pPOS device 400 is similar to the FIG. 2 pPOS device 200, except the interface 480 to L3 payment application and the interface 485 to external sensor data now all go through a remote MCF 490 that is external to pPOS 400. In particular, FIG. 4 shows that the pPOS device 400 includes most elements that are similar to those elements shown in FIG. 2. For example, FIG. 4 shows that pPOS device 400 includes a secure microcontroller function (MCF) 410, a payment kernel 420 (which is contained in the secure MCF 410), a secure element 430, a second MCF 440, a reader 450, a sensor switch 460, a user interface function 470, and an external data sensor switch function 465. FIG. 4 also shows that the pPOS device 400 includes the following interfaces: an interface 425 between secure MCF 410 and the second MCF 440, an interface 455 between secure MCF 410 and the reader 450, an interface 435 between the secure element 430 and the sensor switch 460, an interface 475 between the user interface function 470 and the second MCF 440, an interface 467 between the second MCF 440 and the external data sensor switch 465, an interface 445 between the second MCF 440 and the remote MCF 490, an interface 437 between the external data sensor switch function 465 and the remote MCF 490, and other unlabeled interfaces.

The FIG. 4 pPOS device 400 is now interfaced with the L3 payment application and the external sensor data through the remote MCF 490 (which is external to pPOS 400), because the remote MCF 490 has an interface 480 to the L3 payment application and an interface 485 to the external sensor data.

FIG. 4 shows that pPOS device 400 is connected to a vehicle, because pPOS device 400 interfaces with the L3 payment application and the external sensor data via an external MCF 490 (as shown in FIG. 4). The pPOS device 400 is not standalone, because the pPOS device 400 cannot operate without the logical or physical connection to the vehicle. In other words, the pPOS device 400 cannot be directly accessing the L3 payment application and the external sensor data, unless it is connected to the vehicle.

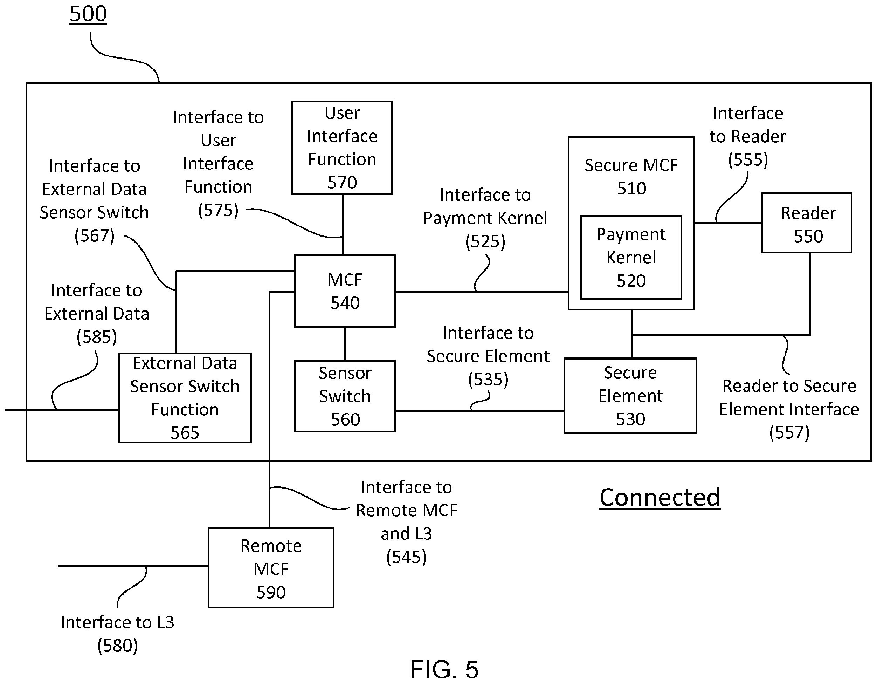

FIG. 5 shows a ninth vehicle based personal Point of Sale (pPOS) device 500 that is configured to provide for card present e-commerce transactions and/or in vehicle merchant payments, wherein the device is connected to a vehicle, in accordance with some example embodiments. The FIG. 5 pPOS device 500 is similar to the FIG. 2 pPOS device 200, except the interface 580 to L3 payment application now go through a remote MCF 590 that is external to pPOS 500. In particular, FIG. 5 shows that the pPOS device 500 includes most elements that are similar to those elements shown in FIG. 2. For example, FIG. 5 shows that pPOS device 500 includes a secure microcontroller function (MCF) 510, a payment kernel 520 (which is contained in the secure MCF 510), a secure element 530, a second MCF 540, a reader 550, a sensor switch 560, a user interface function 570, and an external data sensor switch function 565. FIG. 5 also shows that the pPOS device 500 includes the following interfaces: an interface 525 between secure MCF 510 and the second MCF 540, an interface 555 between secure MCF 510 and the reader 550, an interface 535 between the secure element 530 and the sensor switch 560, an interface 575 between the user interface function 570 and the second MCF 540, an interface 567 between the second MCF 540 and the external data sensor switch 565, an interface 545 between the second MCF 540 and the remote MCF 590, an interface 585 between the external data sensor switch function 565 and the external data, and other unlabeled interfaces.

The FIG. 5 pPOS device 500 is now interfaced with the L3 payment application through the remote MCF 590 (which is external to pPOS 500), because the remote MCF 590 has an interface 580 to the L3 payment application. Similar to FIG. 2, the FIG. 5 pPOS device 500 is still interfaced directly to the external data through interface 585. But, unlike FIG. 2, interface 585 is through the external sensor switch function 565, and not through the second MCF 540 (as shown in FIG. 2).

FIG. 5 shows that pPOS device 500 is connected to a vehicle, because pPOS device 500 interfaces with the L3 payment application via an external MCF 590 (as shown in FIG. 5). The pPOS device 500 is not standalone, because the pPOS device 500 cannot operate without the logical or physical connection to the vehicle. In other words, the pPOS device 500 cannot directly accessing the L3 payment application, unless it is connected to the vehicle.

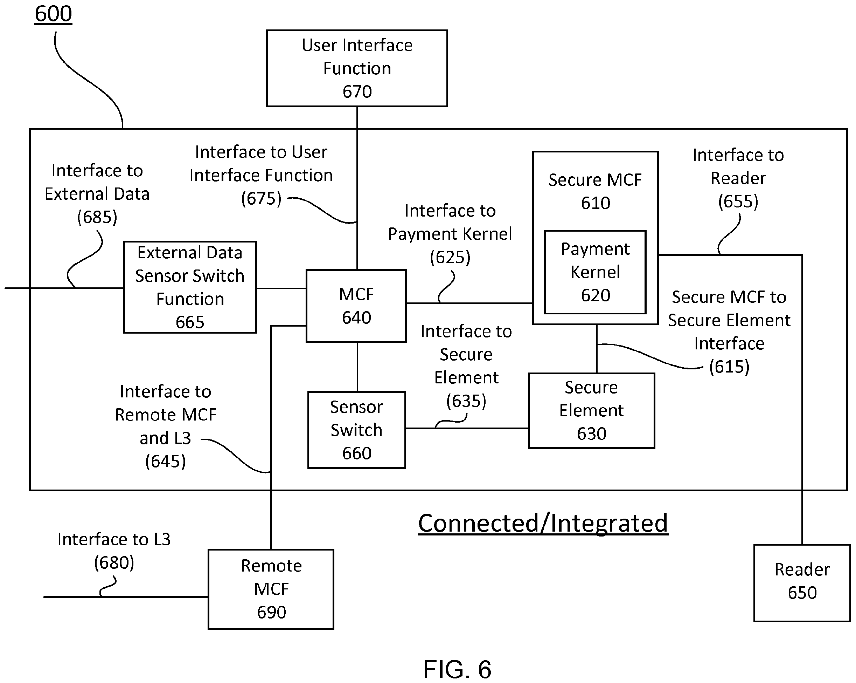

FIG. 6 shows a tenth vehicle based personal Point of Sale (pPOS) device 600 that is configured to provide for card present e-commerce transactions and/or in vehicle merchant payments, wherein the device is connected to and integrated into a vehicle, in accordance with some example embodiments. The FIG. 6 pPOS device 600 is similar to the FIG. 5 pPOS device 500, except the reader 650 and the user interface function 670 are now external to pPOS 600. In particular, FIG. 6 shows that the pPOS device 600 includes most elements that are similar to those elements shown in FIG. 5. For example, FIG. 6 shows that pPOS device 600 includes a secure microcontroller function (MCF) 610, a payment kernel 620 (which is contained in the secure MCF 610), a secure element 630, a second MCF 640, a sensor switch 660, and an external data sensor switch function 665. FIG. 6 also shows that the pPOS device 600 includes the following interfaces: an interface 625 between secure MCF 610 and the second MCF 640, an interface 655 between secure MCF 610 and the reader 650, an interface 635 between the secure element 630 and the sensor switch 660, an interface 675 between the user interface function 670 and the second MCF 640, an interface 645 between the second MCF 640 and the remote MCF 690, an interface 685 between the external data sensor switch function 665 and the external data, and other unlabeled interfaces.

The FIG. 6 pPOS device 600 is interfaced with the L3 payment application through the remote MCF 690 (which is external to pPOS 600), because the remote MCF 690 has an interface 680 to the L3 payment application. The FIG. 6 pPOS device 600 is interfaced directly to the external data through interface 685. Additionally, two components and/or functions of the pPOS device 600 (i.e., the reader 650 and the user interface function 670) are now external to pPOS device 600.

FIG. 6 shows that pPOS device 600 is connected to a vehicle, because pPOS device 600 interfaces with the L3 payment application via an external MCF 690 (as shown in FIG. 6). The pPOS device 600 is not standalone, because the pPOS device 600 cannot operate without the logical or physical connection to the vehicle. In other words, the pPOS device 600 cannot directly accessing the L3 payment application, unless it is connected to the vehicle. At the same time, FIG. 6 also shows that pPOS device 600 is integrated into the vehicle, because two components and/or functions of the pPOS device 600 (i.e., the reader 650 and the user interface function 670) are now external to pPOS device 600. Reader 650 and user interface function 670 are external to pPOS device 600, so they can have a logical and/or physical connection with one or more components and/or functions of the vehicle. As an example, reader 650 can be a reader that is built into the vehicle that can be configured to read a payment and/or identity instrument, and user interface function 670 can be a user interface switch that is built into the vehicle that can be configured to provide a status of the device and a state of the transaction. Therefore, pPOS device 600 is both connected to and integrated into the vehicle.

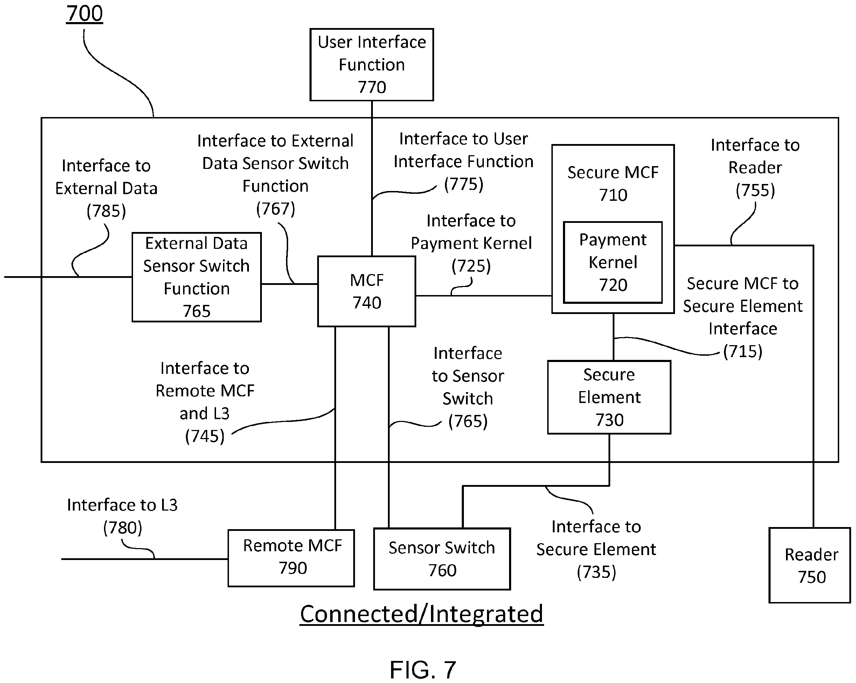

FIG. 7 shows an eleventh vehicle based personal Point of Sale (pPOS) device 700 that is configured to provide for card present e-commerce transactions and/or in vehicle merchant payments, wherein the device is connected to and integrated into a vehicle, in accordance with some example embodiments. The FIG. 7 pPOS device 700 is similar to the FIG. 6 pPOS device 600, except the sensor switch 760 is now external to pPOS 700. In particular, FIG. 7 shows that the pPOS device 700 includes most elements that are similar to those elements shown in FIG. 6. For example, FIG. 7 shows that pPOS device 700 includes a secure microcontroller function (MCF) 710, a payment kernel 720 (which is contained in the secure MCF 710), a secure element 730, a second MCF 740, and an external data sensor switch function 765. FIG. 7 also shows that the pPOS device 700 includes the following interfaces: an interface 715 between secure MCF 710 and the secure element 730, an interface 725 between secure MCF 710 and the second MCF 740, an interface 755 between secure MCF 710 and the reader 750, an interface 735 between the secure element 730 and the sensor switch 760, an interface 775 between the user interface function 770 and the second MCF 740, an interface 745 between the second MCF 740 and the remote MCF 790, an interface 785 between the external data sensor switch function 765 and the external data, and other unlabeled interfaces.

The FIG. 7 pPOS device 700 is interfaced with the L3 payment application through the remote MCF 790 (which is external to pPOS 700), because the remote MCF 790 has an interface 780 to the L3 payment application. The FIG. 7 pPOS device 700 is interfaced directly to the external data through interface 785. Additionally, three components and/or functions of the pPOS device 700 (i.e., the reader 750, the user interface function 770, and the sensor switch 760) are now external to pPOS device 700.

FIG. 7 shows that pPOS device 700 is connected to a vehicle, because pPOS device 700 interfaces with the L3 payment application via an external MCF 790 (as shown in FIG. 7). The pPOS device 700 is not standalone, because the pPOS device 700 cannot operate without the logical or physical connection to the vehicle. In other words, the pPOS device 700 cannot directly accessing the L3 payment application, unless it is connected to the vehicle. At the same time, FIG. 7 also shows that pPOS device 700 is integrated into the vehicle, because three components and/or functions of the pPOS device 700 (i.e., the reader 750, the user interface function 770, and the sensor switch 760) are now external to pPOS device 700. Reader 750 and user interface function 770, and sensor switch 760 are all external to pPOS device 700, so they can have a logical and/or physical connection with one or more components and/or functions of the vehicle. As an example, reader 750 can be a reader that is built into the vehicle that can be configured to read a payment and/or identity instrument, user interface function 770 can be a user interface switch that is built into the vehicle that can be configured to provide a status of the device and a state of the transaction, and sensor switch 760 can be a sensor switch that is built into the vehicle that can be configured to initiate and/or terminate a transaction. Therefore, pPOS device 700 is both connected to and integrated into the vehicle.

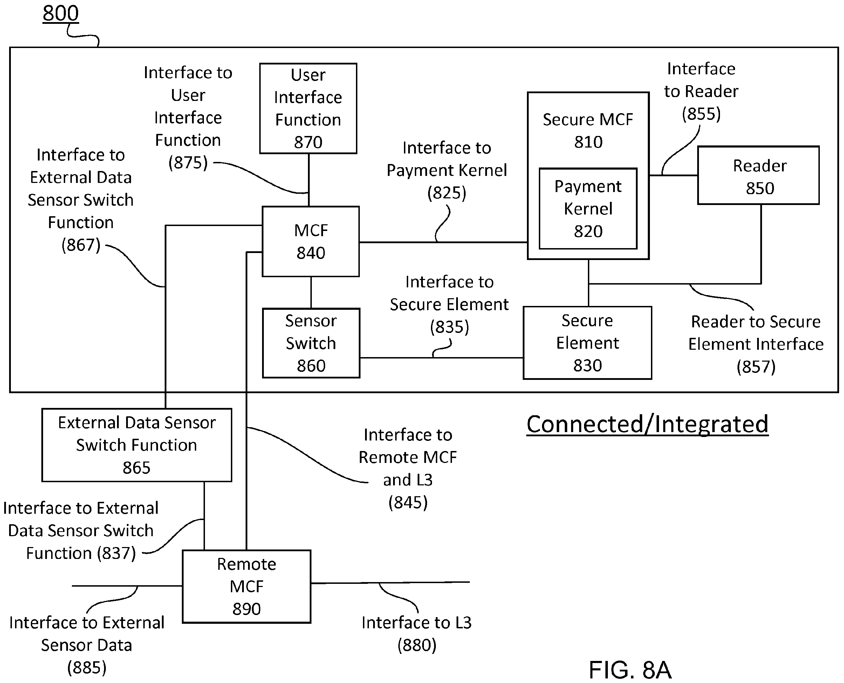

FIG. 8A shows a twelfth vehicle based personal Point of Sale (pPOS) device 800 that is configured to provide for card present e-commerce transactions and/or in vehicle merchant payments, wherein the device is connected to a vehicle, in accordance with some example embodiments. The FIG. 8A pPOS device 800 is similar to the FIG. 4 pPOS device 400, except the external data sensor switch 865 is now external to pPOS 800. In particular, FIG. 8A shows that the pPOS device 800 includes most elements that are similar to those elements shown in FIG. 4. For example, FIG. 8A shows that pPOS device 800 includes a secure microcontroller function (MCF) 810, a payment kernel 820 (which is contained in the secure MCF 810), a secure element 830, a second MCF 840, a reader 850, a sensor switch 860, and a user interface function 870. FIG. 8A also shows that the pPOS device 800 includes the following interfaces: an interface 825 between secure MCF 810 and the second MCF 840, an interface 855 between secure MCF 810 and the reader 850, an interface 835 between the secure element 830 and the sensor switch 860, an interface 875 between the user interface function 870 and the second MCF 840, an interface 867 between the second MCF 840 and the external data sensor switch 865, an interface 845 between the second MCF 840 and the remote MCF 890, and other unlabeled interfaces.

The FIG. 8A pPOS device 800 is now interfaced with the L3 payment application and the external sensor data through the remote MCF 890 (which is external to pPOS device 800) and external data sensor switch function 865 (which is also external to pPOS device 800), because the remote MCF 890 has an interface 880 to the L3 payment application and an interface 885 to the external sensor data. There is also an interface 837 between external data sensor switch function 865 and remote MCF 890.

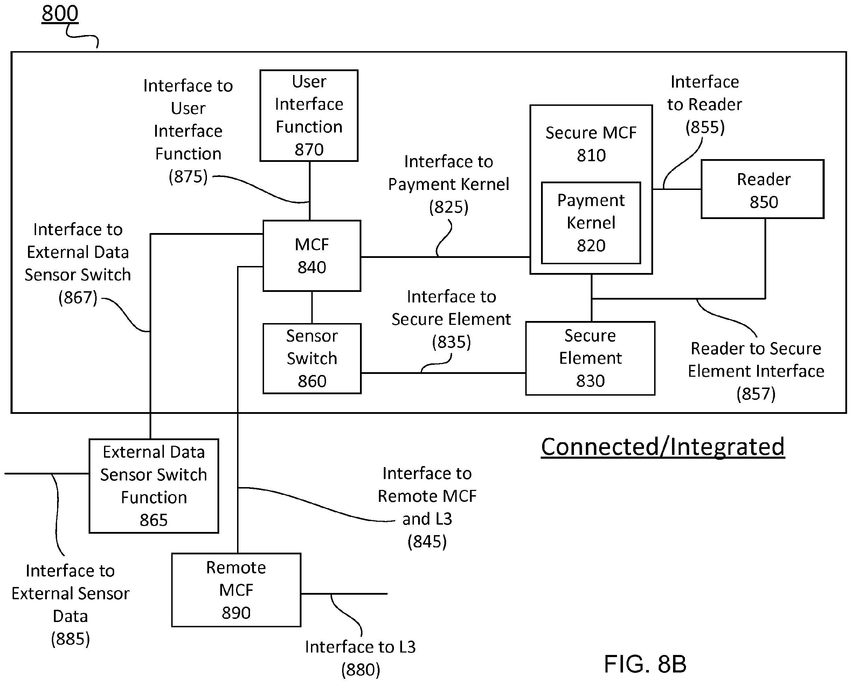

FIG. 8A shows that pPOS device 800 is connected to a vehicle, because pPOS device 800 interfaces with the L3 payment application and the external sensor data via an external MCF 890 (as shown in FIG. 8A). The pPOS device 800 is not standalone, because the pPOS device 800 cannot operate without the logical or physical connection to the vehicle. In other words, the pPOS device 800 cannot directly accessing the L3 payment application, unless it is connected to the vehicle. At the same time, FIG. 8 also shows that pPOS device 800 is integrated into the vehicle, because one component and/or function of the pPOS device 800 (i.e., the external data sensor switch function 865) is now external to pPOS device 800. External data sensor switch function 865 is external to pPOS device 800, so it can have a logical and/or physical connection with one or more components and/or functions of the vehicle. As an example, external data sensor switch function 865 can be an external data sensor switch function that is built into the vehicle that can be configured to process external data for pPOS device 800, and to validate, manage, and/or create transactions. Therefore, pPOS device 800 is both connected to and integrated into the vehicle.

FIG. 8B shows a twelfth vehicle based personal Point of Sale (pPOS) device that is configured to provide for card present e-commerce transactions and/or in vehicle merchant payments, wherein the device is connected to and integrated into a vehicle (in a different configuration from FIG. 8A), in accordance with some example embodiments. The FIG. 8B pPOS device 800 is identical to the FIG. 8A pPOS device 800, but FIGS. 8A and 8B show a different configuration on the vehicle side. The difference is that the FIG. 8B pPOS device 800 is interfaced with the external sensor data through the external data sensor switch function 865 and not through the remote MCF 890. Accordingly, interface 885 to the external sensor data go through the external data sensor switch function 865 and not the remote MCF 890. FIG. 8B shows that pPOS device 800 is both connected to and integrated into the vehicle, for substantially the same reasons as the ones presented for FIG. 8A.

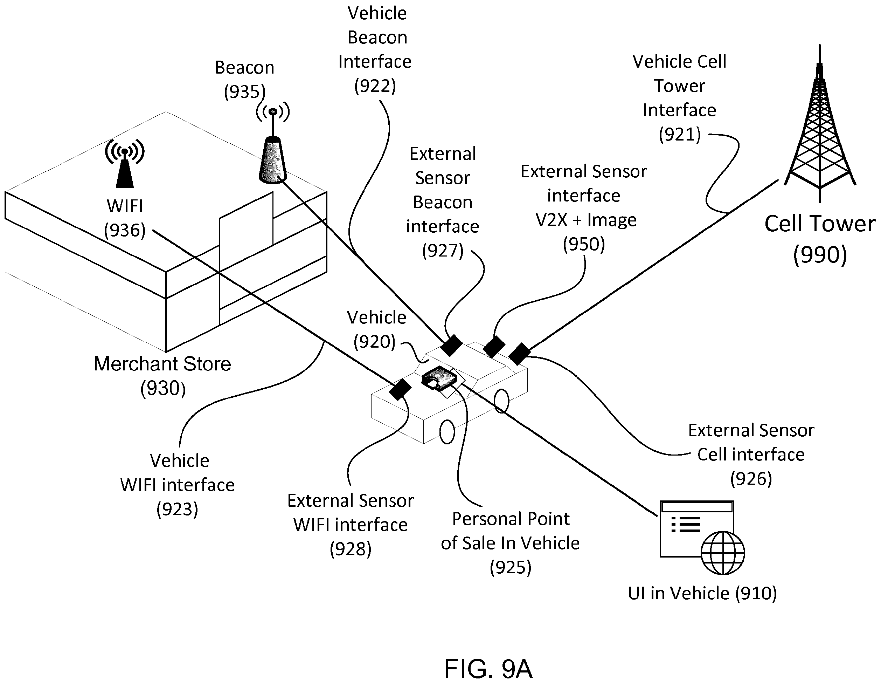

FIG. 9A shows a first QSR (quick service restaurant) configuration that can use a vehicle based personal Point of Sale (pPOS) device 925 for providing card present e-commerce transactions, in accordance with some example embodiments. FIG. 9A shows that pPOS device 925 is based in a vehicle 920. There is user interface (UI) 910 in vehicle 920 that is associated with pPOS 925. FIG. 9A shows that vehicle 920 is in close proximity of merchant store 930, which has WiFi (wireless local area network) 936 and beacon 935. In FIG. 9A, pPOS device 925 is shown to receive external sensor data from the following sources: cell tower 990, WiFi (wireless local area network) 936, beacon 935, V2X (vehicle-to-infrastructure and/or vehicle-to-vehicle) signal and image data. These external sensor data are in turn received by the following data sensors on vehicle 920: external sensor cell interface 926, external sensor WiFi interface 928, external sensor beacon interface 927, and external sensor V2X and image interface 950. In addition, FIG. 9A also shows the interfaces between the external data sources and the external data sensors on vehicle 920. These interfaces include vehicle cell tower interface 921, vehicle WiFi interface 923, and vehicle beacon interface 922.

The external data sensor switch function of pPOS device 925 is configured to process external data for pPOS device 925. The external data processed can include the above external sensor data (i.e., cellular signal from cell tower 990, signal from WiFi (wireless local area network) 936, signal from beacon 935, V2X radar signal and image data). In some embodiments, the external data sensor switch function is configured to validate, manage, and/or create transactions. In some embodiments, the external data sensor switch function allows external data to access configuration and processing of the payment kernel by a merchant, a merchant acquirer, a payment issuer, and/or an identification issuer. In some embodiments, the external data sensor switch function allows external data to access configuration and processing of the payment kernel by a merchant, a merchant acquirer, a payment issuer, and/or an identification issuer, wherein the external data is processed by the external data sensor switch function. In some embodiments, the external data sensor switch function provides one or more of the following functions: (1) sensor data validation and filters, (2) data identification by type and/or sensor and/or interface and/or communication protocol, (3) data correlation between data types and sensors, (4) data fusion between data, communication protocol, and data types.

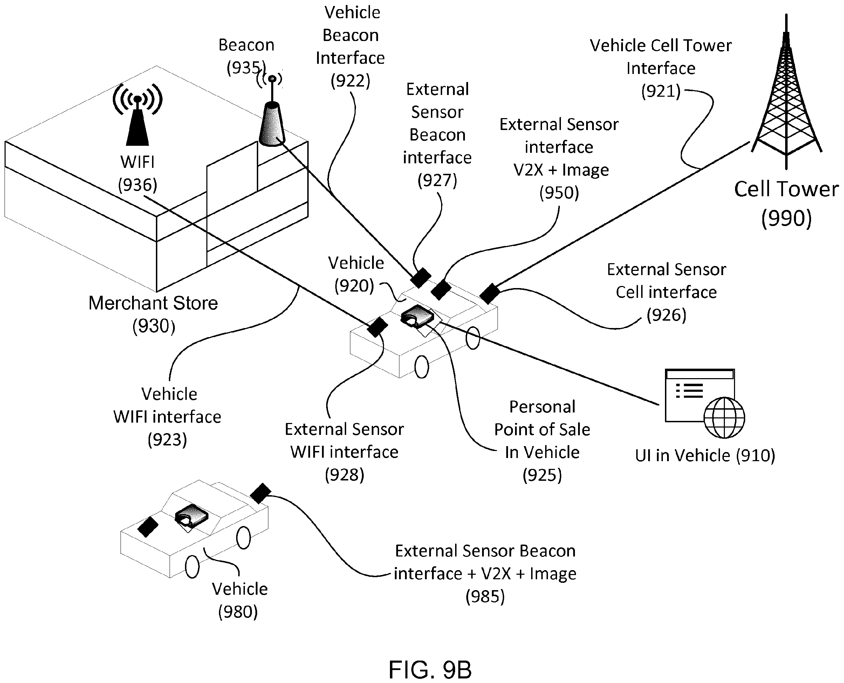

FIG. 9B shows a second QSR (quick service restaurant) configuration that can use a vehicle based personal Point of Sale (pPOS) device 925 for providing card present e-commerce transactions, together with multiple vehicles and V2X communication, in accordance with some example embodiments. FIG. 9B shows all the same elements as FIG. 9A, plus a second vehicle 980, which can act as another source of external data. FIG. 9B shows this new source of external data as external sensor beacon interface + V2X + Image. In some embodiments, multiple vehicles and V2X communication opens up the possibilities of vehicle to vehicle payment, checking your position in the vehicle queue, data sharing or data hopping between vehicles, etc.

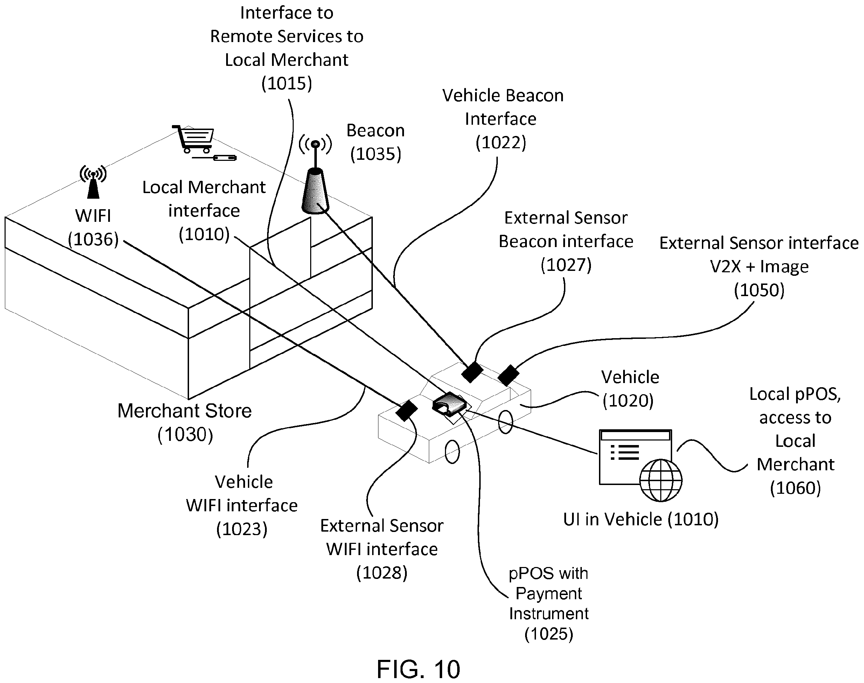

FIG. 10 shows a third QSR (quick service restaurant) configuration that can use a vehicle based personal Point of Sale (pPOS) device 1025 for providing card present e-commerce transactions, together with local merchant interface, in accordance with some example embodiments. FIG. 10 is very similar to FIG. 9A, except there is now a local merchant interface 1010 that pPOS 1025 can use to make a payment through interface to remote services to local merchant 1015. In particular, FIG. 10 shows that pPOS device 1025 is based in a vehicle 1020. There is user interface (UI) 1010 in vehicle 1020 that is associated with pPOS 1025. FIG. 10 shows that vehicle 1020 is in close proximity of merchant store 1030, which has WiFi (wireless local area network) 1036 and beacon 1035. In FIG. 10, pPOS device 1025 is shown to receive external sensor data from the following sources: WiFi (wireless local area network) 1036, beacon 1035, V2X (vehicle-to-infrastructure and/or vehicle-to-vehicle) signal and image data. These external sensor data are in turn received by the following data sensors on vehicle 1020: external sensor WiFi interface 1028, external sensor beacon interface 1027, and external sensor interface V2X and image 1050. In addition, FIG. 10 also shows the interfaces between the external data sources and the external data sensors on vehicle 1020. These interfaces include vehicle WiFi interface 1023, and vehicle beacon interface 1022.

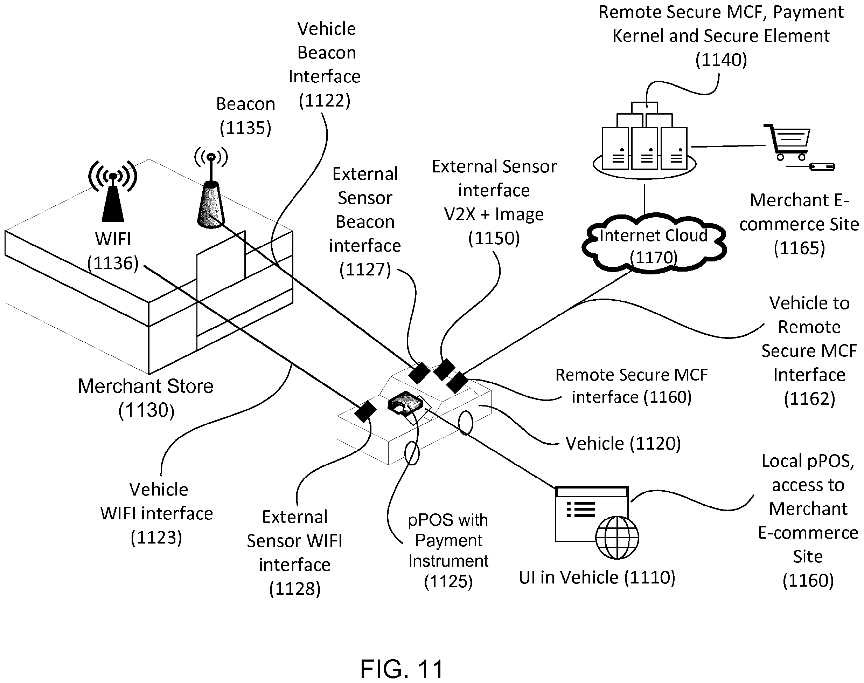

FIG. 11 shows a fourth QSR (quick service restaurant) configuration that can use a vehicle based personal Point of Sale (pPOS) device 1125 for providing card present e-commerce transactions, together with remote payment kernel, in accordance with some example embodiments. FIG. 11 is very similar to FIG. 10, except in FIG. 11 pPOS device 1125 makes a payment through the merchant e-commerce site 1165 in the internet cloud 1170 (instead of through the local merchant interface 1010 as shown in FIG. 10). In particular, FIG. 11 shows that pPOS device 1125 is based in a vehicle 1120. There is user interface (UI) 1110 in vehicle 1120 that is associated with pPOS 1125. FIG. 11 shows that vehicle 1120 is in close proximity of merchant store 1130, which has WiFi (wireless local area network) 1136 and beacon 1135. In FIG. 11, pPOS device 1125 is shown to receive external sensor data from the following sources: WiFi (wireless local area network) 1136, beacon 1135, V2X (vehicle-to-infrastructure and/or vehicle-to-vehicle) signal and image data, and also possibly the internet cloud 1170. These external sensor data are in turn received by the following data sensors on vehicle 1120: external sensor WiFi interface 1128, external sensor beacon interface 1127, and external sensor interface V2X and image 1150, and remote secure MCF interface (1160). In addition, FIG. 11 also shows the interfaces between the external data sources and the external data sensors on vehicle 1120. These interfaces include vehicle WiFi interface 1123, vehicle beacon interface 1122, and vehicle to remote secure MCF interface 1162.

In FIG. 11, pPOS device 1125 can make a payment through the merchant e-commerce site 1165 in the internet cloud 1170. Furthermore, because of the internet cloud connection, pPOS device 1125 can also possibly access remote secure MCF, remote payment kernel, and remote secure element (shown as 1140) in the internet cloud 1170. FIG. 11 shows 1160 as primarily a remote secure MCF interface, but in some embodiments it is also possible for 1160 to act as an external data sensor.

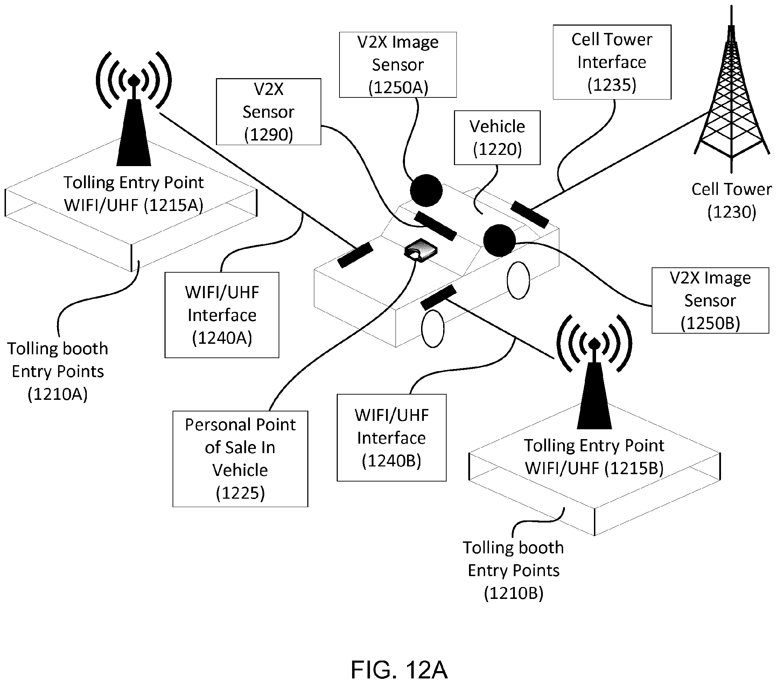

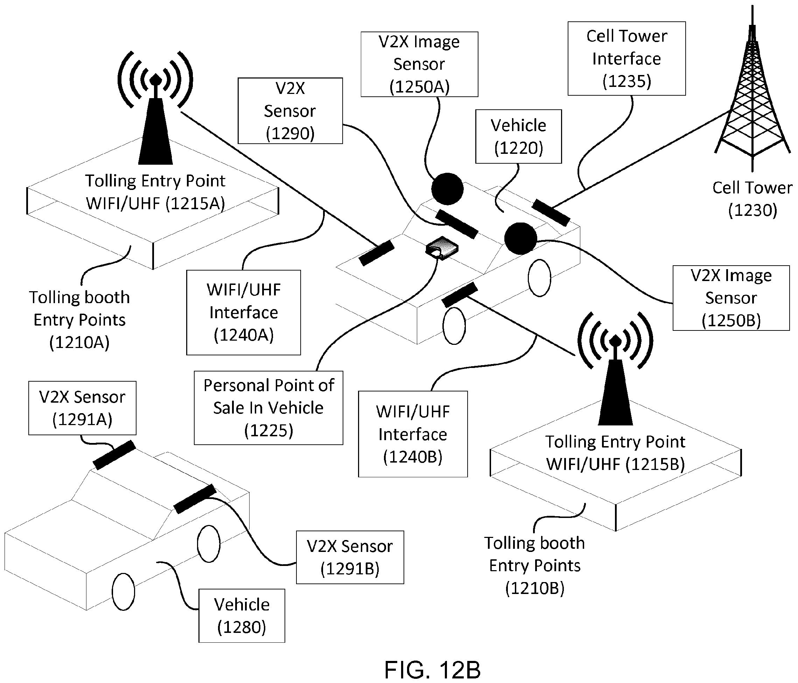

FIG. 12A shows a first tolling booth configuration that can use a vehicle based personal Point of Sale (pPOS) device 1225 for providing card present e-commerce transactions, in accordance with some example embodiments. FIG. 12A shows that pPOS device 1225 is based in a vehicle 1220. FIG. 12A shows that the vehicle 1220 is in close proximity of tolling booth entry points 1210A and 1210B, which have tolling entry point WiFi /UHF (wireless local area network/ultra high frequency) 1215A and 1215B. In FIG. 12, pPOS device 1225 is shown to receive external sensor data from the following sources: cell tower 1230, V2X (vehicle-to-infrastructure and/or vehicle-to-vehicle) sensor 1290, V2X image sensors 1250A and 1260B, and tolling entry point WiFi /UHF 1215A and 1215B. These external sensor data are in turn received by data sensors (unlabeled in FIG. 12A) on the vehicle 1220. In addition, FIG. 12A also shows the interfaces between the external data sources and the external data sensors on vehicle 1220. These interfaces include cell tower interface 1235, and WiFi/UHF interface 1240A and 1240B.

The external data sensor switch function of pPOS device 1225 is configured to process external data for pPOS device 1225. The external data processed can include the above external sensor data (i.e., cellular signal from cell tower 1230, V2X sensor signal, V2X image sensor signal, WiFi/UHF signal). In some embodiments, the external data sensor switch function is configured to validate, manage, and/or create transactions. In some embodiments, the external data sensor switch function allows external data to access configuration and processing of the payment kernel by a merchant, a merchant acquirer, a payment issuer, and/or an identification issuer. In some embodiments, the external data sensor switch function allows external data to access configuration and processing of the payment kernel by a merchant, a merchant acquirer, a payment issuer, and/or an identification issuer, wherein the external data is processed by the external data sensor switch function. In some embodiments, the external data sensor switch function provides one or more of the following functions: (1) sensor data validation and filters, (2) data identification by type and/or sensor and/or interface and/or communication protocol, (3) data correlation between data types and sensors, (4) data fusion between data, communication protocol, and data types.

FIG. 12B shows a second tolling booth configuration that can use a vehicle based personal Point of Sale (pPOS) device 1225 for providing card present e-commerce transactions, together with multiple vehicles and V2X communication, in accordance with some example embodiments. FIG. 12B shows all the same elements as FIG. 12A, plus a second vehicle 1280, which can act as another source of external data. FIG. 12B shows this new source of external data as V2X sensors 1291A and 1291B. In some embodiments, multiple vehicles and V2X communication opens up the possibilities of vehicle to vehicle payment, checking your position in the vehicle queue, data sharing or data hopping between vehicles, etc.

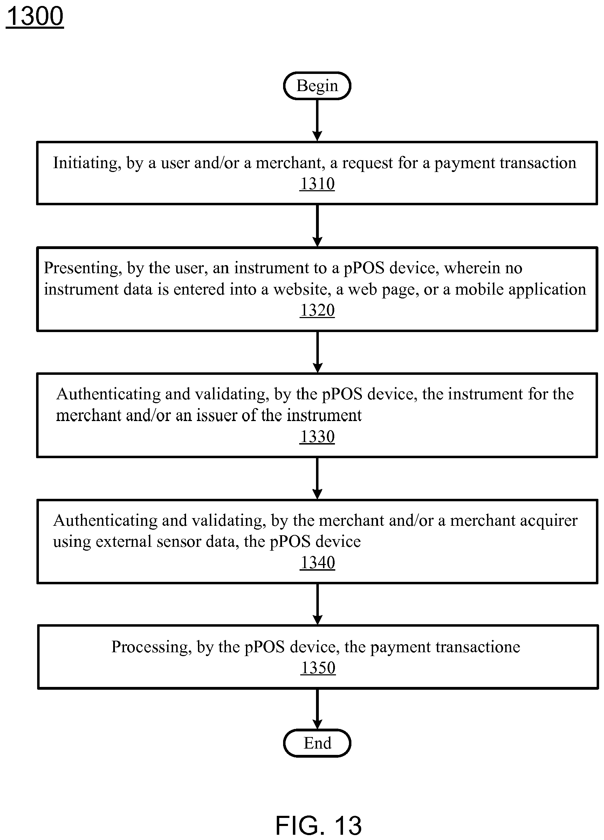

FIG. 13 shows a flow chart of method steps for providing a personal Point of Sale (pPOS) for card present e-commerce transactions and/or in-vehicle payments, in accordance with some example embodiments. As shown in FIG. 13, the method 1300 begins at step 1310, where the method initiates, by a user and/or a merchant, a request for a payment transaction. Then, the method proceeds to step 1320. In step 1320, the method presents, by the user, an instrument to a pPOS device, wherein no instrument data is entered into a website, a web page, or a mobile application. Next, at step 1330, the method authenticates and validates, by the pPOS device, the instrument for the merchant and/or an issuer of the instrument. Then, at step 1340, the method authenticates and validates, by the merchant and/or a merchant acquirer using external sensor data, the pPOS device. Next, the method proceeds to step 1350. At step 1350, the method processes, by the pPOS device, the payment transaction.

In some embodiments, the instrument is a payment instrument and/or an identity instrument. In some embodiments, the vehicle can be a payment instrument and/or an identity instrument.

A pPOS device can provide for card present e-commerce transactions and/or in-vehicle payments. In some embodiments, for a pPOS device, a customer initiates the transaction by presenting the payment and/or identity instrument to the pPOS device. In some embodiments, for a pPOS device, a merchant initiates the transaction from an external system that requires a payment and/or authentication from a user. In some embodiments, the identity instrument enables authentication of a user and is comprised of one or more of the following: a face of the user, a finger of the user, a fingerprint of the user, an iris of the user, a voice of the user, a heart rhythm of the user, a physical attribute of the user.

In some embodiments, the payment instrument can be one of the following: a vehicle, a card form factor, a mobile phone, and a wearable. In some embodiments, the identity instrument is comprised of one or more of the following: a face of the user, a finger of the user, a fingerprint of the user, an iris of the user, a voice of the user, a heart rhythm of the user, a physical attribute of the user.

In some embodiments, the authenticating and validating step and the processing step are executed locally on and/or remotely from the pPOS device based on merchant and merchant acquirer rules. In some embodiments, an execution time is managed for optimal performance based on local and remote processing resources.

In some embodiments, a processing logic for execution locally on and/or remotely from the pPOS device is determined based on one or more of the following: merchant type, items or services being purchased, payment application, payment presentment type, processing time, merchant preference, merchant acquirer processing rules. In some embodiments, a shared processing between executing locally on and/or remotely from the pPOS device is optimized for performance of the payment transaction based on one or more of the following: merchant type, items or services being purchased, payment and/or identification instrument, payment and/or identification application, payment presentment type, processing time, merchant preference, merchant acquirer processing rules, remote resources, local resources, interface protocol and capabilities.

In this specification, example embodiments have been presented in terms of a selected set of details. However, a person of ordinary skill in the art would understand that many other example embodiments may be practiced which include a different selected set of these details. It is intended that the following claims cover all possible example embodiments.

The various aspects, embodiments, implementations or features of the described embodiments can be used separately or in any combination. Various aspects of the described embodiments can be implemented by software, hardware or a combination of hardware and software.

The foregoing description, for purposes of explanation, used specific nomenclature to provide a thorough understanding of the described embodiments. However, it will be apparent to one skilled in the art that the specific details are not required in order to practice the described embodiments. Thus, the foregoing descriptions of specific embodiments are presented for purposes of illustration and description. They are not intended to be exhaustive or to limit the described embodiments to the precise forms disclosed. It will be apparent to one of ordinary skill in the art that many modifications and variations are possible in view of the above teachings.

## Claims

1. A device for providing a personal point of sale (pPOS) for card present e-commerce transactions and/or in vehicle merchant payments, the device comprising:
a secure microcontroller function (MCF);
a secure element, the secure element configured to store and process payment and identification application,
wherein a payment kernel configured to process payment is local and/or remote to the device,
wherein the device is standalone, connected to, or integrated into a vehicle.

2. The device of claim 1 further comprising one or more of the following:
a reader, the reader configured to read a payment and/or identity instrument;
a sensor switch, the sensor switch configured to initiate and/or terminate a transaction;
a user interface function;
a local and/or remote payment kernel;
an external data sensor switch function, the external data sensor switch function configured to validate, manage, and/or create transactions.

3. The device of claim 2, wherein the external data sensor switch function is further configured to process external data for the device.

4. The device of any preceding claim, wherein a user of the device is allowed to grant access to configuration and processing of the payment kernel by a merchant, a merchant acquirer, a payment issuer, and/or an identification issuer.

5. The device of any preceding claim,
wherein the device allows external data to access configuration and processing of the payment kernel by a merchant, a merchant acquirer, a payment issuer, and/or an identification issuer.

6. The device of claim 2,
wherein the device allows external data to access configuration and processing of the payment kernel by a merchant, a merchant acquirer, a payment issuer, and/or an identification issuer,
wherein the external data is processed by the external data sensor switch function.

7. The device of any preceding claim, wherein the device is standalone when the device has no logical or physical connection to the vehicle, and/or wherein the device is connected to the vehicle when the device has a logical and/or physical connection to the vehicle.

8. The device of any preceding claim, further comprising:
a second microcontroller function (MCF),
wherein the device is connected to the vehicle when the device has a logical and/or physical connection to the vehicle via the second MCF.

9. The device of any one of claims 1 to 7, further comprising:
a second microcontroller function (MCF),
wherein the device is connected to the vehicle when the device has a logical and/or physical connection to the vehicle via the second MCF and/or a third remote MCF,
wherein the third remote MCF is physically remote from the device.

10. The device of claim 9, wherein the device receives external sensor data via the second MCF and/or the third remote MCF.

11. The device of any preceding claim, wherein the device is integrated into the vehicle when the device has a logical and/or physical connection between one or more components and/or functions of the device to one or more components and/or functions of the vehicle.

12. The device of claim 2,
wherein an antenna of the reader is enabled in the device,
wherein the antenna is connected to, or integrated into the vehicle,
wherein the interface from the antenna to the vehicle is comprised of one or more of the following:
wireless charging,
WiFi (wireless local area network) communication,
Bluetooth or Bluetooth low energy communication,
NFMI (near field magnetic induction) communication,
cellular communication,
V2X (vehicle-to-infrastructure and/or vehicle-to-vehicle) communication.

13. The device of claim 2,
wherein the user interface function is enabled in the device,
wherein the user interface function is connected to, or integrated into the vehicle,
wherein the interface from the user interface function to the vehicle is comprised of one or more of the following:
heads up interface,
console interface,
instrument interface,
driving interface,
human to machine interface,
graphical user interface,
gesturing interface.

14. The device of claim 2,
wherein the sensor switch is enabled in the device,
wherein the sensor switch is connected to, or integrated into the vehicle,
wherein the interface from the sensor switch to the vehicle is comprised of one or more of the following:
heads up interface,
console interface,
instrument interface,
driving interface,
human to machine interface,
graphical user interface,
gesturing interface,
steering interface,
navigation interface.

15. A method for providing a personal point of sale (pPOS) for card present e-commerce transactions and/or in-vehicle payments, the method comprising:
initiating, by a user and/or a merchant, a request for a payment transaction;
presenting, by the user, an instrument to a pPOS device, wherein no instrument data is entered into a website, a web page, or a mobile application;
authenticating and validating, by the pPOS device, the instrument for the merchant and/or an issuer of the instrument;
authenticating and validating, by the merchant and/or a merchant acquirer using external sensor data, the pPOS device;
processing, by the pPOS device, the payment transaction.
